(19) Europäisches Patentamt / European Patent Office / Office européen des brevets

(11) **EP 4 738 256 A1**

(12) **EUROPEAN PATENT APPLICATION**

(43) Date of publication:
**06.05.2026 Bulletin 2026/19**

(21) Application number: **25211358.4**

(22) Date of filing: **27.10.2025**

(51) International Patent Classification (IPC):
**G06T 7/60** *(2017.01)* **G06T 7/73** *(2017.01)*
**G01N 23/203** *(2006.01)*

(52) Cooperative Patent Classification (CPC):
**G06T 7/60; G06T 7/74;** G01N 23/203;
G06T 2207/10061

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **05.11.2024 US 202418937596**

(71) Applicant: **FEI COMPANY**
**Hillsboro, OR 97124 (US)**

(72) Inventors:
• **KASPER, Jan**
**Olomouc (CZ)**
• **PETREK, Martin**
**Olomouc - Nové Sady (CZ)**
• **VYSTAVEL, Tomás**
**Brno (CZ)**
• **HOLZER, Jakub**
**Brno (CZ)**
• **KREN, Michal**
**Staré Mesto (CZ)**

(74) Representative: **Boult Wade Tennant LLP**
**Salisbury Square House**
**8 Salisbury Square**
**London EC4Y 8AP (GB)**

(54) **METHODS OF DETERMINING A DEFORMATION CHARACTERISTIC AND ASSOCIATED SYSTEMS**

(57) In an example, a method includes determining a characteristic displacement gradient (DG) tensor that characterizes a deformation characteristic. The method includes, in an iterative routine, calculating an objective function value associated with a trial DG tensor based, at least in part, on pixel values within a zone of consideration (ZOC) that is determined automatically based at least in part on the trial DG tensor. In another example, a method includes determining one or more rotational transformation components corresponding to a test image and determining a characteristic DG tensor based at least in part on the rotational transformation component(s). In another example, a system includes an electron optics assembly, a detector assembly, and a controller programmed to determine a characteristic DG tensor. In another example, a non-transitory computer readable medium stores instructions which, when executed by a computer, cause the computer to perform a method of determining a deformation characteristic.

FIG. 9

900
910 APPLY MASK TO TEST PATTERN IMAGE AND/OR REFERENCE PATTERN IMAGE
912 PRE-PROCESS TEST PATTERN IMAGE AND/OR REFERENCE PATTERN IMAGE
914 DETERMINE ROTATIONAL TRANSFORMATION COORDINATE(S)
916 GENERATE INITIAL DG TENSOR
918 RECEIVE EXPECTED CONVERGENCE RADIUS AND/OR EXPECTED ROTATIONAL MAGNITUDE
920 GENERATE TRIAL ROTATION VECTORS
922 CALCULATE ROTATION ERROR FACTORS
924 SELECT INITIALIZATION ROTATION VECTOR
926 DETERMINE CHARACTERISTIC DG TENSOR
928 DETERMINE ZOC
930 CALCULATE OBJECTIVE FUNCTION VALUE
932 DETERMINE WEIGHT FACTORS
934 APPLY WEIGHT FACTORS TO PIXEL VALUES
936 DETERMINE SHIFTED PIXEL LOCATIONS
938 DETERMINE STRESS TENSOR

EP 4 738 256 A1

**Description**

**FIELD**

The present disclosure relates generally to methods of determining a deformation characteristic of a test image relative to a reference image, and associated systems.

**BACKGROUND**

In the field of charged particle microscopy, electron backscatter diffraction (EBSD) represents a technique for obtaining information regarding the crystallographic structure of a specimen. In particular, in EBSD, an electron beam is directed to a tilted specimen, and the backscattered electrons form a diffraction pattern that is recorded by a detector. The resulting electron backscatter diffraction patterns (EBSPs) may be analyzed to provide information regarding crystal grain structure, grain orientation, deformations, and other such features. In some examples, a material deformation of the specimen may be characterized through comparison of the EBSP recorded at an undeformed "reference" portion of the specimen and a deformed "test" portion of the specimen. Many prior techniques for performing such analysis, however, suffer from limited computational efficiency and/or versatility.

**SUMMARY**

In a representative example, a computer-implemented method of determining a deformation characteristic of a test image relative to a reference image includes determining with a processor, via an iterative routine, a characteristic displacement gradient tensor that characterizes the deformation characteristic. The determining the characteristic displacement gradient tensor comprises, at one or more steps of the iterative routine, calculating an objective function value associated with a trial displacement gradient tensor. The objective function value is based, at least in part, on pixel values of pixel locations that are within a zone of consideration of the test image and the reference image. The zone of consideration is determined automatically based at least in part on the trial displacement gradient tensor.

In another representative example, a computer-implemented method of determining a deformation characteristic of a test image relative to a reference image includes determining, with a processor system, one or more rotational transformation components corresponding to the test image and generating an initial displacement gradient tensor based, at least in part, on the one or more rotational transformation components. The method further includes, using the initial displacement gradient tensor, determining, with the processor system, a characteristic displacement gradient tensor that characterizes the deformation characteristic. Determining the characteristic displacement gradient tensor includes determining by, in one or more steps of an iterative routine, calculating a scalar objective function value corresponding to each of one or more trial displacement gradient tensors. One of the one or more trial displacement gradient tensors in the first step of the iterative routine is the initial displacement gradient tensor.

In another representative example, a system includes an electron optics assembly configured to direct an electron beam to a selected location on a specimen, a detector assembly configured to record a diffraction pattern associated with an interaction between the electron beam and the specimen, and a controller. The controller is programmed to receive a reference image from the detector assembly when the electron beam is directed to a reference location on the specimen and to receive a test image from the detector assembly when the electron beam is directed to a test location on the specimen. The controller additionally is programmed to determine, via an iterative routine, a characteristic displacement gradient tensor that characterizes a deformation characteristic of the test image relative to the reference image. At each step of the iterative routine, the controller is programmed to calculate an objective function value corresponding to a trial displacement gradient tensor such that the objective function value is based on pixel values of pixel locations that are within a zone of consideration of each of the test image and the reference image. The zone of consideration is determined automatically based in part on the trial displacement gradient tensor.

In another representative example, a non-transitory computer readable medium stores instructions which, when executed by a computer, cause the computer to perform a method of determining a deformation characteristic of a test image relative to a reference image. The method includes determining, via an iterative routine, a characteristic displacement gradient tensor that characterizes the deformation characteristic. The instructions include instructions for determining the characteristic displacement gradient tensor by, at each step of the iterative routine, calculating an objective function value corresponding to a trial displacement gradient tensor such that the objective function value is based on pixel values of pixel locations that are within a zone of consideration of each of the test image and the reference image. The zone of consideration is determined automatically based in part on the trial displacement gradient tensor.

The foregoing and other objects, features, and advantages of the disclosed technology will become more apparent from the following detailed description, which proceeds with reference to the accompanying figures.

**BRIEF DESCRIPTION OF THE DRAWINGS**

FIG. 1 is a schematic illustration of a system for performing EBSD according to an example.

FIG. 2A is a reference EBSD image according to an example.

FIG. 2B is a test EBSD image according to an example.

FIG. 3 is a schematic diagram illustrating a manner in which a specimen strain can yield a transformation of an EBSP according to an example.

FIG. 4 is a modulated EBSD image representing the test EBSD image of FIG. 2B with the pixel locations shifted according to a displacement gradient tensor determined via an image processing method according to an example.

FIG. 5A is an image representing a difference between the test image of FIG. 2B and the reference image of FIG. 2A.

FIG. 5B is an image representing a difference between the modulated image of FIG. 4 and the reference image of FIG. 2A.

FIG. 6A is a first reference EBSD image according to an example.

FIG. 6B is a second reference EBSD image according to an example.

FIG. 6C is a difference map representing the difference between the first reference EBSD image of FIG. 6A and the second reference EBSD image of FIG. 6B according to an example.

FIG. 6D is a contour plot representing the difference between the first reference EBSD image of FIG. 6A and the second reference EBSD image of FIG. 6B according to an example.

FIGS. 7A-7H are plots representing objective function values as corresponding characteristic displacement gradient tensor components are varied away from an optimized value according to an example.

FIG. 8 is a schematic representation of a set of trial rotation vectors that may be tested to generate an initial displacement gradient tensor according to an example.

FIG. 9 is a flow chart depicting a method of determining a deformation characteristic of a test image relative to a reference image according to an example.

FIG. 10 is a schematic representation of a computing system that may be used to perform one or more methods of the present disclosure according to an example.

**DETAILED DESCRIPTION**

The present disclosure generally is directed to methods of determining a deformation characteristic associated with an EBSP generated via an EBSD analysis. More specifically, the present disclosure relates to various examples in which the deformation characteristic is associated with a degree of strain in a crystalline specimen under investigation. As described in more detail herein, disclosed methods and systems can determine a characteristic displacement gradient (DG) tensor that characterizes the strain in the specimen. In particular, the characteristic DG tensor may be related to and/or determined based on a modulation of an EBSP associated with a deformed region of the specimen relative to an EBSP associated with a reference region of the specimen. It is to be understood, however, that both the general principles and the specific implementations described herein may be practiced in conjunction with any of a variety of image processing applications. In the present disclosure, an EBSP additionally or alternatively may be referred to as an EBSD image.

In general, disclosed methods can include data processing routines that are performed upon a reference EBSD image and a test EBSD image. The reference EBSD image is associated with a reference region of a specimen, while the test EBSD image is associated with a test region of the specimen that is deformed relative to the reference region.

Disclosed methods can seek to identify a characteristic DG tensor that is best associated with a difference between the test EBSD image and the reference EBSD image. In particular, with a given DG tensor that characterizes a corresponding deformation of the specimen, the DG tensor can be used to generate a set of pixel location shifts corresponding to a manner in which features of the reference EBSD image are moved in the plane of the image as a result of the deformation. In this manner, the DG tensor can operate to map the pixel locations of the test EBSD image onto corresponding pixel locations of the reference EBSD image.

The fitness of a given DG tensor under consideration (e.g., the characteristic DG tensor and/or any intermediate DG tensor used in the determination of the characteristic DG tensor) is quantified via an objective function. The objective function operates to compare the data at each relevant pixel location of the reference EBSD image to the data at a corresponding shifted pixel location of the test EBSD image. As described in more detail below, the objective function may be constructed so as to reference as many data points of the EBSD images as is practically possible while avoiding biases that may be caused by oversampling certain regions of the EBSD images. Additionally, or alternatively, the objective function may be defined in such a manner as to sample data points of the EBSD images with respective weights, such as to reflect varying degrees of image fidelity in various regions of the EBSD images.

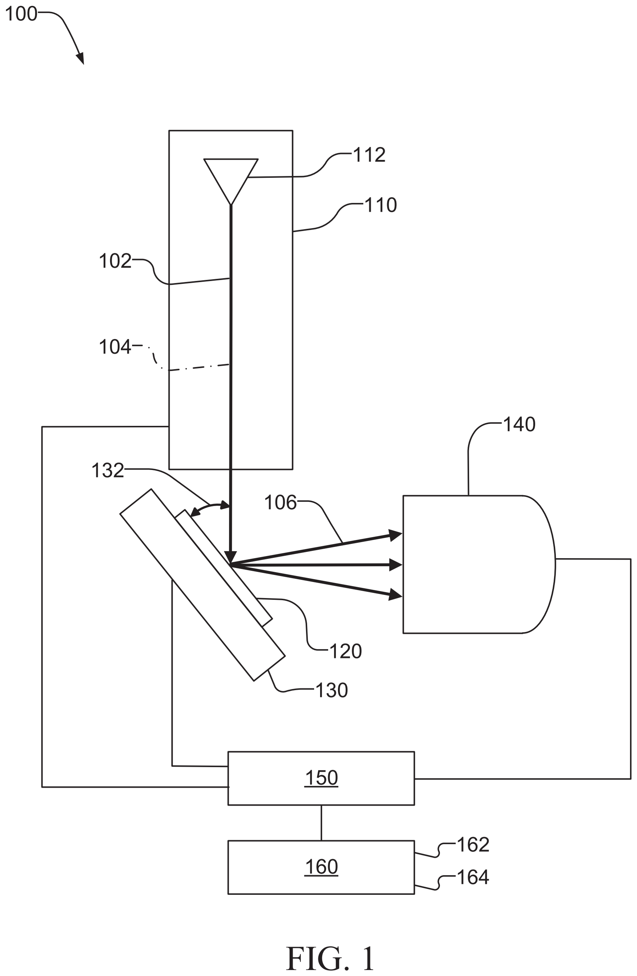

FIG. 1 depicts a charged particle microscope (CPM) system 100 that may be used in conjunction with methods according to the present disclosure. Specifically, in the example of FIG. 1, the CPM system 100 is a scanning electron microscope (SEM) 100 that includes an electron optics assembly 110 configured to direct an electron beam 102 to a selected location on a specimen 120. The electron optics assembly 110 can include and/or represent any suitable collection of electron optics elements, such as condenser lenses, objective lenes, scanning deflectors, beam-limiting apertures, etc. As shown in FIG. 1, the electron optics assembly 110 can include an electron source 112 configured to generate the electron beam 102.

As shown in FIG. 1, the specimen 120 may be supported by a specimen holder 130 such that the specimen 120 is tilted relative to an optical axis 104 along which the electron beam 102 travels by a tilt angle 132. In some examples, the tilt angle is approximately 30 degrees. Tilting the specimen 120 in this manner can serve to increase an interaction volume for scattering of electrons within the specimen 120. This is not required of all examples, however, and it additionally is within the scope of the present disclosure that the specimen 120 may not be tilted relative to the optical axis 104.

Scattering of the incident electron beam 102 by the crystalline structure of the specimen 120 can cause backscattered electrons 106 to leave the specimen 120 along a plurality of scattering angles. These scattering angles are representative of interactions between the electrons and the crystal structure of the specimen 120. The backscattered electrons can then be collected by a detector 140 that records an EBSD image, the structure of which is representative of the scattering angles of the backscattered electrons 106. Analysis of the recorded EBSD image can thus reveal information regarding the crystallographic structure of the specimen 120.

As shown in FIG. 1, the SEM 100 can include a controller 150 configured and/or programmed to control various aspects of the SEM 100. For example, the controller 150 may be configured and/or programmed to control the electron optics assembly 110 and/or the specimen holder 130 to move the location at which the electron beam 102 probes the specimen 120. The SEM 100 additionally can include a user interface 160. For example, the user interface 160 can include a user input device 162 to receive user inputs from a user and/or a display device 164 to display information to the user.

The controller 150 can be programmed to perform at least a portion of any of the methods disclosed herein. For example, the controller 150 can include a processor system with one or more processors that are configured and/or programmed to execute any of the steps, calculations, determinations, etc. described herein. Such computer-based implementation may be necessitated by the complexity and/or multiplicity of the calculations described herein. For example, as described herein, the methods of the present disclosure can include various image processing routines, iteratively performed minimization algorithms, and high-dimensional tensor arithmetic that would be impractical and/or impossible for a human to perform within practical time scales.

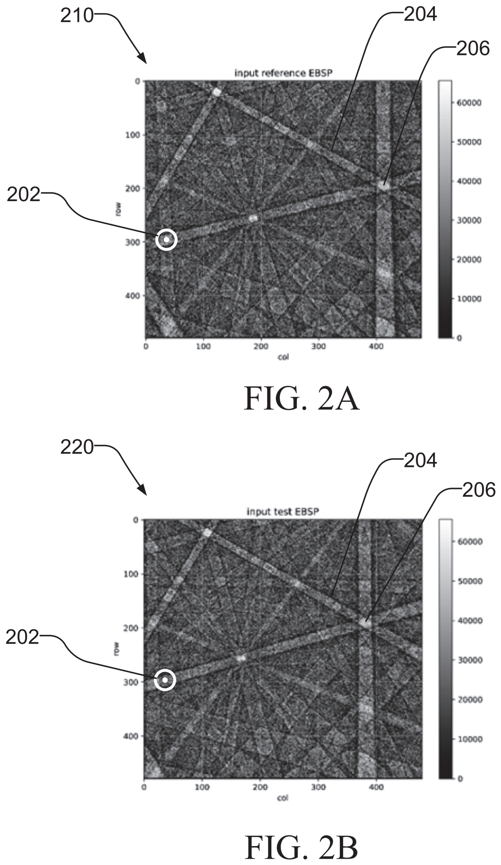

FIGS. 2A-2B represent examples of EBSD images that may be generated by an SEM system such as the SEM 100 of FIG. 1 when performing EBSD as described above. In particular, FIG. 2A is an example of a reference EBSD image 210 recorded when the electron beam of the SEM system is directed to a reference location on a specimen. FIG. 2B is an example of a test EBSD image 220 recorded when the electron beam of the SEM system is directed to a test location on the specimen that is structurally modified relative to the reference location. As a more specific example, the reference location may correspond to a location at which the crystalline structure of the specimen is at least substantially free from applied stresses, while the test location may correspond to a location at which the crystalline structure exhibits a mechanical strain as a result of an applied stress.

As shown in FIGS. 2A-2B, the reference EBSD image 210 and the test EBSD image 220 can be characterized as a set of pixels, each of which is located at a corresponding pixel location (e.g., row and column coordinates) and is associated with a corresponding pixel value (visualized here as grayscale values). When visualized in the manner of FIGS. 2A-2B, these pixel values can yield band-like structures known as Kikuchi lines 204. The configuration of the Kikuchi lines 204 and/or of the intersection vertices 206 thereof may be analyzed to provide information regarding the crystalline structure of the specimen.

The structural differences between the reference location of the specimen and the test location of the specimen are reflected in the respective EBSD images shown in FIGS. 2A-2B. In each of FIGS. 2A-2B, a reference marker labeled 202 indicates the same pixel location (e.g., same set of row and column coordinates) in each image. With this visual aid, it may be seen that the Kikuchi lines 204 of FIG. 2B are shifted in position relative to configuration of FIG. 2A.

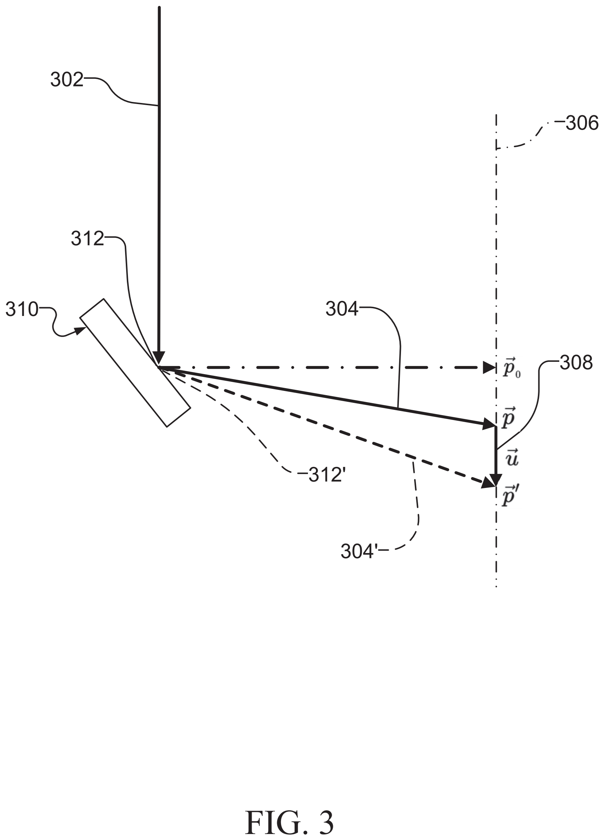

The manner in which the features of the test EBSD image 220 are shifted relative to those of the reference EBSD image 210 may be represented and/or determined via a DG tensor that characterizes the deformation of the specimen at the test location. FIG. 3 illustrates a manner in which the deformation of the specimen can produce a shift in the pixel location of a given feature of an EBSP. Specifically, FIG. 3 illustrates an electron beam 302 incident upon a reference location 312 of a specimen 310 (e.g., a non-deformed portion of the specimen 310) such that backscattered electrons 304 are directed to a pixel location $\vec{p}$ in an image plane 306. Alternatively, when the electron beam 302 is incident upon a deformed location 312' of the specimen 310, the backscattered electrons 304' are directed to a shifted pixel location in the image plane 306 $\vec{p}' = \vec{p} + \vec{u}$, where $\vec{u}$ may be described as representing a pixel shift in the image plane 306. In this manner, each of the vectors $\vec{p}, \vec{p}'$, and $\vec{u}$ shown in FIG. 3 is to be understood as representing a two-dimensional vector in the image plane 306. The deformed location 312' may correspond to the same location as the reference location 312 after applying a stress to the specimen 310 to yield a deformed crystalline structure. Alternatively, the deformed location 312' may correspond to a different location of the specimen 310 that exhibits a structural deformation relative to the reference location 312.

A continuum deformation can be described as displacing a space point $\vec{r}$ to another point $\vec{r}' = \vec{r} + \Delta\vec{r}(\vec{r})$. For a small deformation, the displacement $\Delta\vec{r}$ can be approximated with a Taylor series:

$$\Delta\vec{r}(\vec{r}) = \Delta\vec{r_0} + D\vec{r} + \cdots, \tag{1}$$

where $\Delta\vec{r_0}$ accounts for a global shift and $D$ stands for the DG tensor with components

$$D_{ij} = \frac{\partial\Delta\vec{r_i}}{\partial\vec{r_j}}. \tag{2}$$

The pixel shift vector $\vec{u}$ may be expressed in terms of the DG tensor $D$ as follows:

$$\vec{u}(\vec{p}, D, \vec{c}, R) = \begin{pmatrix} q_1/q_3 - v_1 \\ q_2/q_3 - v_2 \end{pmatrix}, \tag{3}$$

$$\vec{q} = t\vec{v}, \tag{4}$$

$$\vec{v} = \begin{pmatrix} p_1 - \beta_1 \\ p_2 - \beta_2 \\ 1 \end{pmatrix}, \tag{5}$$

$$t = \begin{pmatrix} \alpha & 0 & 0 \\ 0 & -\alpha & 0 \\ 0 & 0 & 1 \end{pmatrix} R(I + D)R^{-1} \begin{pmatrix} 1/\alpha & 0 & 0 \\ 0 & -1/\alpha & 0 \\ 0 & 0 & 1 \end{pmatrix}, \tag{6}$$

$$\alpha = Wc_3, \tag{7}$$

$$\beta = \begin{pmatrix} W/2 + W(c_1 - 0.5) \\ H/2 - W(c_2 - 0.5) \end{pmatrix}, \tag{8}$$

where $I$ is the unit matrix and $W$ and $H$ are the width and height of the EBSD image in numbers of pixels. In these equations, $\vec{c} = (c_1, c_2)$ denotes the EBSD image center in relative coordinates. For example, with reference to FIG. 3, a center point $\vec{p_0}$ of the EBSD image can be expressed in coordinates as $\vec{\gamma} = (\gamma_1, \gamma_2, \gamma_3)$, where $\gamma_1$ and $\gamma_2$ represent the row and column, respectively characterizing $\vec{p_0}$ and $\gamma_3$ represents a distance between the reference location 312 and $\vec{p_0}$ as measured along a direction perpendicular to the image plane 306. The image center in relative coordinates can then be written as $\vec{c} = \vec{\gamma}/W$.

Additionally, in these equations, R represents a rotation between the detector coordinate frame and the specimen crystal coordinate frame, such that the strain may be expressed in the specimen crystal coordinate frame.

For hydrostatic deformations, the DG tensor D is a multiple of the unit matrix, and there is no shift in the EBSD image; i.e., u ≡ 0. More generally, for any deformation characterized by a DG tensor D, there exists a class of deformations $D'(\lambda)$ that induce identical pixel shifts $\vec{u}$:

$$D'(\lambda) = \lambda D + (\lambda - 1)I, \hspace{3cm} (9)$$

where $\lambda$ is an arbitrary real parameter. This can be seen from the fact that, in equation 3, the $\vec{q}$ vector components enter into a ratio such that scaling the vector $\vec{q}$ has no effect. Scaling t thus also has no effect, and this does not have the scaling of the sum $I + D$.

In this manner, a given DG tensor may be used to produce a set of pixel shifts to map the pixel locations of a reference EBSD image to corresponding shifted pixel locations of the test EBSD image (and/or vice versa); i.e., pixel locations of the test EBSD image whose pixel values represent the same features as those of the pixel locations of the reference EBSD image.

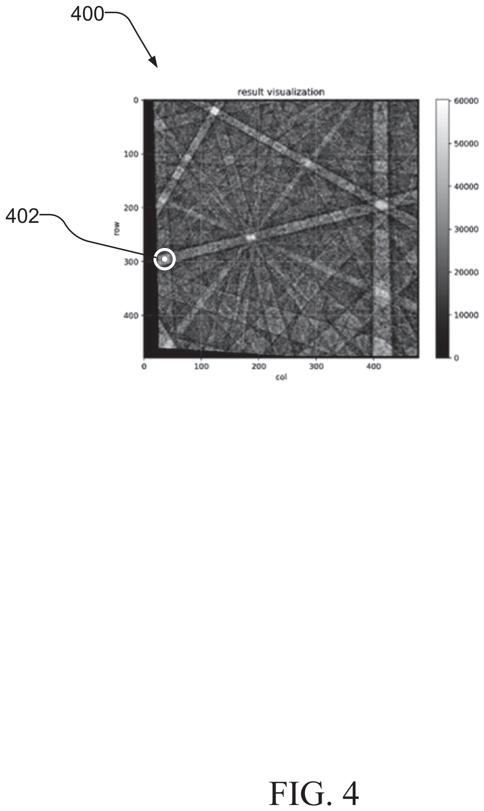

FIG. 4 illustrates a modulated EBSD image 400 representing the test EBSD image 220 of FIG. 2B with pixel values instead represented at pixel locations that are shifted according to a characteristic DG tensor. Similar to FIGS. 2A-2B, FIG 4 illustrates a reference marker 402 that indicates the same pixel location as the reference marker 202 of FIGS. 2A-2B. As may be seen by comparing the image features at the locations of the reference markers 202 of FIGS. 2A-2B and 402 of FIG. 4, the image modulation represented in FIG. 4 is a good representation of the reference EBSD image 210 of FIG. 2A.

Comparing a test EBSD image to a reference EBSD image can thus be used to determine a characteristic DG tensor corresponding to the difference between these images, which in turn may be used to characterize the structural deformations of the specimen. More specifically, for a given candidate DG tensor, an objective function value can be calculated that represents the degree to which the candidate DG tensor corresponds to the modulation of the test EBSD image relative to the test EBSD image. Using the objective function, the characteristic DG tensor may thus be identified from and/or using a plurality of such candidate DG tensors. The present disclosure is directed to methods of determining such a characteristic DG tensor for a given reference EBSD image and a given test EBSD image.

In the following discussion, the reference EBSD image also may be referred to as a reference image, and/or the test EBSD image also may be referred to as a test image. While the present disclosure generally relates to examples in which the images represent EBSD images, this is not required, and it is within the scope of the present disclosure that the methods disclosed herein may be applicable to any of a variety of input images.

Additionally, references herein to images (e.g., the test/reference EBSD images and/or the test/reference images) generally refer to any suitable structures that associate pixel values with pixel locations as described herein. It is to be understood, however, that such descriptions do not require that any such image be rendered and/or displayed graphically. Such images may correspond to mathematical structures, structures stored in computer memory, structures operated upon by a computer processer, etc. As used herein, references to evaluating, examining, characterizing, comparing, and/or otherwise using a given image may be understood as referring to performing the described operations upon the pixel values and/or pixel locations that represent the given image.

As used herein, the term "image" may be used to refer generically to reference EBSD images, test EBSD images, and/or any other applicable pattern and/or image representation thereof.

The reference EBSD image, the test EBSD image, and/or any other image as described herein may be acquired and/or provided in any of a variety of manners. For example, one or more of the images may be provided to a controller that performs any of the methods described herein (e.g., the controller 150 of FIG. 1) by a user, such as via a user interface (e.g., the user interface 160 of FIG. 1). Additionally, or alternatively, one or more of the images may be automatically provided to and/or received by the controller. For example, the controller can be configured to automatically receive one or more images from an associated system that generates the images, such as the detector 140 of FIG. 1.

In various examples, the reference EBSD image, the test EBSD image, and/or any other image as described herein may be pre-processed, such as by a controller that performs any of the methods described herein and/or prior to providing the images to the controller. For example, in order to suppress noise in an image, a Gaussian blurring can be applied to the image. In some examples, the degree of blurring may be specified by a user. Additionally, or alternatively, the degree of blurring may be determined at least partially automatically, such as via an analysis of the noise present in the image. As another example, the image may be downscaled in order to suppress noise in the image.

In some examples, pre-processing an image additionally or alternatively can include applying a mask to the image, such as to remove and/or exclude data that is known to not represent meaningful information. Such masking may be performed in any suitable manner, such as by assigning the pixel values of pixels to be masked to a predetermined value, by removing such pixels from the image altogether, by labeling such pixels as being masked, etc. As examples, the pixels to be masked in such a step may include pixels corresponding to invalid content (e.g., corresponding to broken hardware, contamination on the detector, etc.) and/or pixels representing locations out of a detector coverage range.

As a more specific example, such a masking may correspond to one or more "blind spot" regions of the SEM detector at which no signal is expected to be received, such as due to occlusion by other elements of the SEM system. As another example, the image may represent a composition of images collected from several spaced apart detectors, with the overall image being effectively blank in regions corresponding to the regions between detectors. Such blank regions may thus be masked to exclude such regions from consideration in analysis of the image.

In some examples, the pixel masking may include masking pixels that are affected by one or more other pre-processing steps. For example, when blurring is applied during pre-processing, the potentially invalid information may "leak" from masked pixels to neighboring pixels. Accordingly, it may be desirable to extend the pixel mask to cover such neighboring pixels as well. Quantitatively, this may correspond to extending a periphery of the masked region by a margin of $(1.5\sigma_{blur} + 1)$ pixels, where $\sigma_{blur}$ quantifies a degree of Gaussian blurring.

Additionally, or alternatively, the pre-processing can include generating the image (e.g., the reference EBSD image and/or the test EBSD image) based on a plurality of input recorded images. For example, a reference EBSD image may be recorded from a specimen location within a region in which no strain and/or deformation is expected to be present. Accordingly, performing EBSD at a plurality of respective specimen locations within such a region can produce a plurality of base images that may be assumed to differ only in the form of random noise. Such base images may then be averaged to produce a reference EBSD image with a suppressed noise level relative to each of the base images. Specifically, the pixel value of each pixel location of the reference EBSD image may be calculated as the average of the pixel values of the base images at the same pixel location.

The fitness of any given DG tensor may be quantified via a comparison of a reference image to a modulated image that represents the pixel shifts corresponding to the given DG tensor. For example, for each pixel location $\vec{p}$ of the reference image, a pixel difference $\Delta(\vec{p}, D)$ may be defined as

$$\Delta = g\big(\vec{p} + \vec{u}(\vec{p}, D)\big) - f(\vec{p}), \qquad\qquad (10)$$

where $f(\vec{p})$ represents the pixel value of the reference image at the pixel location and $g(\vec{p} + \vec{u})$ represents the pixel value of the test image at the shifted pixel location $\vec{p} + \vec{u}$.

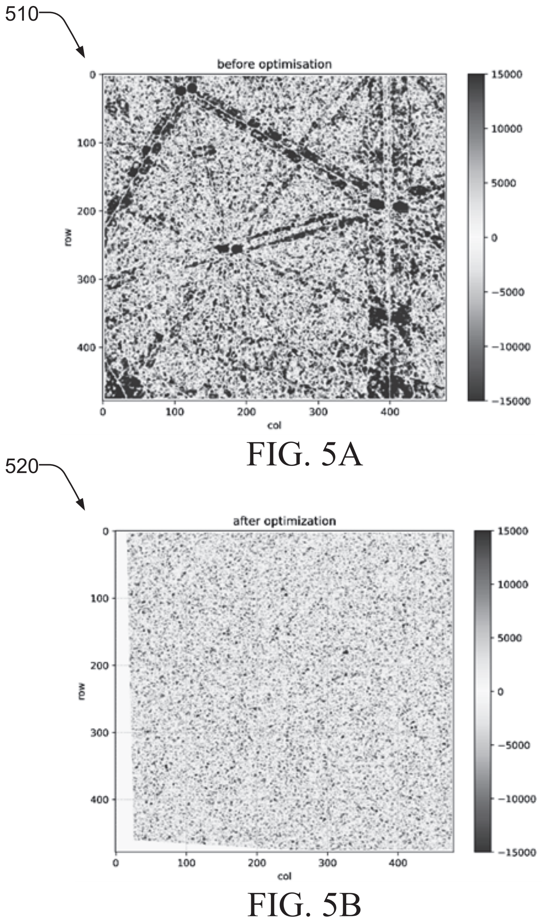

As an example of a comparison of a test image to a reference image without applying pixel shifts, FIG. 5A illustrates a map 510 depicting the values of the pixel differences corresponding to each pixel location of the reference EBSD image 210 of FIG. 2A as compared to the corresponding pixel locations of the test EBSD image 220 of FIG. 2B. Stated differently, the pixel value of each pixel location of the map 510 is calculated as the difference between the pixel values of the same pixel locations of the reference EBSD image 210 of FIG. 2A and the test EBSD image 220 of FIG. 2B. Because FIG. 2B corresponds to a test EBSD image without applying pixel shifts to pixel locations, FIG. 2B may be described as representing an example in which the DG tensor D is null (i.e., with all components equal to zero). As shown in FIG. 5A, comparing identical pixel locations between the reference EBSD image and the test EBSD image yields substantial nonzero pixel differences across the area of the image.

By contrast, FIG. 5B illustrates a map 520 depicting the values of the pixel differences corresponding to each pixel location of the reference EBSD image 210 of FIG. 2A as compared to corresponding shifted pixel locations of the test EBSD image 220 of FIG. 2B, which are shifted in accordance with a characteristic DG tensor. The map 520 of FIG. 5B equivalently may be described as representing the differences between the pixel values at identical pixel locations of the reference EBSD image 210 of FIG. 2A and the modulated EBSD image 400 of FIG. 4.

Comparing FIGS. 5A and 5B, it may be seen that the effect of applying pixel shifts in accordance with the characteristic DG tensor is to significantly reduce the average pixel differences across the set of overlapping pixel locations. This average difference may be quantified in any of a variety of manners. In particular, an objective function OF may be defined as follows:

$$OF(D) = \frac{\sum_{\vec{p}\in\Omega}\big(w(\vec{p}, D)\big)^2\big(\Delta(\vec{p}, D)\big)^2}{\sum_{\vec{p}\in\Omega}\big(w(\vec{p}, D)\big)^2}, \qquad\qquad (11)$$

where w is a weight factor, $\vec{u}$ is a pixel shift (as determined, e.g., via equation 3), and $\Omega$ represents a set of pixel locations referred to herein as a zone of consideration (ZOC). As above, for a given pixel location $\vec{q}$, $f(\vec{q})$ represents the pixel value of the reference image at the pixel location, and g(q) represents the pixel value of the test image at the pixel location.

With reference to the example of FIGS. 5A-5B, the fitness of the DG tensor that generates the pixel shifts reflected in FIG. 5B may be reflected in an objective function value corresponding to FIG. 5B that is significantly smaller than that corresponding to FIG. 5A. The task of identifying the DG tensor that best characterizes the set of pixel shifts that map the test image onto the reference image thus may be equivalent to the task of minimizing the objective function, as described in more detail herein.

With reference to equation 11, the ZOC, $\Omega$, generally corresponds to all available pixel locations $\vec{p}$ at which the difference $\Delta(\vec{p}, D)$ may be defined; that is, all available pixel locations $\vec{p}$ at which $\vec{p}$ corresponds to a pixel location within the reference image and in which $\vec{p} + \vec{u}$ corresponds to a pixel location within the test image. In this manner, the ZOC may be described as representing a maximal overlap between the pixel locations of the reference image and the shifted pixel locations of the test image. Because the pixel shifts $\vec{u}$ depend upon the given DG tensor D, the ZOC also generally depends upon the given DG tensor, thereby allowing for the condition of maximal pixel overlap to be satisfied for any given DG tensor. Additionally, because the ZOC may be determined in a well-defined manner for a given DG tensor in conjunction with a given reference image and a given test image, the determination of the ZOC may be performed automatically. In this manner, the determination of the ZOC stands in contrast with alternative analyses in which one or more regions of interest of the test image and/or reference image must be manually selected.

In the present disclosure, the ZOC may be described as representing a region (e.g., a set of pixel locations) of the reference image and/or as representing a region (e.g., a set of shifted pixel locations) of the test image. Because the extent of the ZOC depends upon the degree of overlap between the reference image and the (shifted) test image, the portion of the reference image included in the ZOC depends upon the test image, and vice-versa. In general, the ZOC represents a set of pixel locations that equivalently may be expressed as a region of the reference image and/or as a region of the test image. In the case of a non-trivial DG tensor, the respective regions of the reference image and of the test image may be non-identical to one another, while still representing the same ZOC.

In general, the shifted pixel location $\vec{p} + \vec{u}$ may not correspond to integer coordinates (e.g., specific row/column coordinates) and/or to an individual pixel of the test image. For example, the shifted pixel location $\vec{p} + \vec{u}$ may correspond to a pixel location that is within the bounds of the test image but that is located between the discretized pixel locations of the test image to which the pixel values are assigned. In such examples, the pixel value of a shifted pixel location $\vec{p} + \vec{u}$ may be determined via an interpolation scheme that samples one or more of the pixel values nearest to the shifted pixel location. In some examples, such an interpolation scheme includes performing a linear interpolation from the three nearest pixel locations with integer coordinates, but any other suitable interpolation and/or approximation scheme also may be used.

In some examples, the ZOC may be constructed so as to exclude various pixel locations from consideration, such as pixel locations at which the pixel values are masked, undefined, and/or otherwise deemed irrelevant. For example, and as discussed above, prior to calculating the objective function, a portion of the reference image and/or of the test image may be masked in such a manner as to delete or otherwise remove from consideration various pixel locations that are to be disregarded. Such masking may be performed as a portion of a pre-processing routine as described above and/or may be performed during the construction of the ZOC corresponding to a given DG tensor.

In various examples, the weight factor $w(\vec{p}, D)$ of equation 11 is a scalar quantity that represents the relative relevance of the pixel location p in the reference image and/or of the shifted pixel location $p + \vec{u}$ in the test image. Since the pixel shifts $\vec{u}$ generally are based upon the DG tensor $D$, the weight factor w similarly may be described as being a function of $D$. In this manner, pixel locations that are deemed more relevant and/or of higher quality may be assigned greater values of the weight factor w, and thus may yield a greater impact upon the calculated objective function than pixel locations associated with smaller values of the weight factor.

The weight factors $w(\vec{p}, D)$ may be determined and/or defined in any of a variety of manners. For example, the weight factors may be determined at least partially empirically based on analysis of the test image and/or of the reference image to evaluate regions of greater and/or lesser image fidelity. In some examples, such image fidelity is related to and/or representative of a localized level of noise in the image. Defining the objective function with weight factors in this manner thus allows for every pixel location within the ZOC to be considered (e.g., included in equation 11 with a nonzero weight factor), while also allowing for the objective function to reflect known and/or measurable variations in the image quality.

Additionally, with reference to equation 11, dividing the sum of the weighted squared differences (the numerator of equation 11) by the sum of the squared weight factors (the denominator of equation 11) effectively normalizes the value of the objective function against the number of pixel locations that are considered in the calculation of the objective function. Accordingly, objective function values that are calculated with reference to respective ZOCs that include different numbers of pixel locations may be compared directly to one another, thus further enabling maximal use of the data corresponding to any given ZOC. As a result, the absolute value of the objective function value is meaningful in the sense that the objective function values calculated with respect to different ZOCs (e.g., encompassing different numbers of pixel locations) may be directly compared with one another.

For example, respective objective function values may be calculated for two DG tensors that correspond to ZOCs that encompass different numbers of pixel locations. As a result of the normalization of the objective function value, the objective function values corresponding to the two DG tensors can be directly compared to one another to determine which DG tensor better represents the deformation of the specimen.

The noise characteristics of the reference image and/or of the test image may be evaluated in any suitable manner. For example, performing EBSD on a specimen as described above can include recording a plurality of sample reference images at each of a corresponding plurality of sample reference locations of the specimen that are sufficiently proximal to one another that any variations between the sample reference images are primarily and/or exclusively attributed to random noise. Comparing such sample reference images, such as at an individual pixel level or with reference to localized groups of pixels, may thus yield a quantitative representation of the level of noise as a function of the pixel location within the reference image. In such examples, the weight factor w may thus be constructed such that pixel locations that are associated with a relatively high degree of noise are assigned relatively small weight factors. Analogous techniques additionally or alternatively may be used to evaluate noise characteristics of the test image, such as via comparison with a plurality of sample test images recorded at proximal specimen sample test locations.

In some examples, the weight factors $w(\vec{p}, D)$ may include a functional representation, such as to allow the weight factor to be analytically determined based on any given pixel location $\vec{p}$. For example, the measured location-specific noise characteristics of an image may be subjected to a polynomial fit to smooth out variations and/or outliers in the noise data. As another example, such a functional representation may be constructed and/or determined independent of an empirical analysis of the reference image or of the test image. For example, the weight factors may be assigned a functional form that decreases with radial distance from a center point of the image under consideration, which may reflect an approximation that noise levels generally increase with increasing distance from this center point.

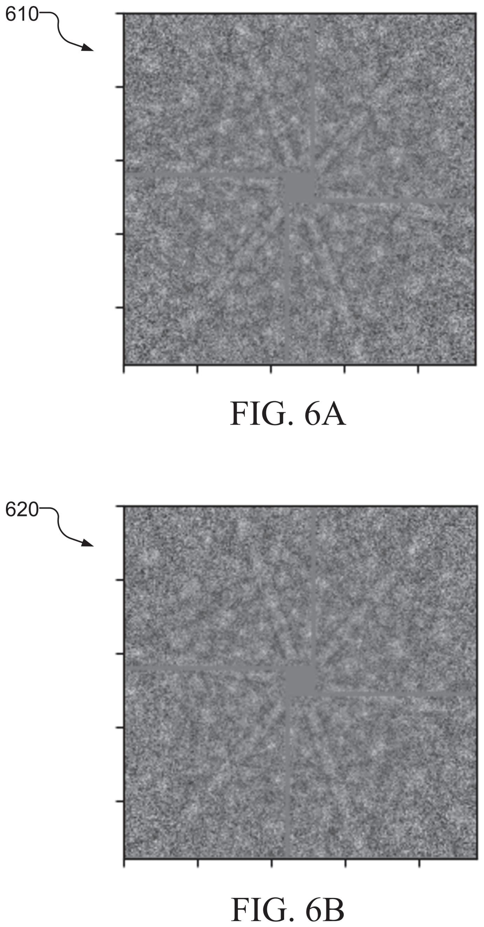

As a more specific example, FIG. 6A represents a first reference EBSD image 610 as recorded at a first specimen location, while FIG. 6B represents a second reference EBSD image 620 as recorded at a second specimen location that is nominally identical to the first specimen location (e.g., with respect to a degree, or absence, of specimen deformation). The first reference EBSD image 610 and the second reference EBSD image 620 thus may be regarded as being at least substantially identical to one another aside from variations caused by random noise.

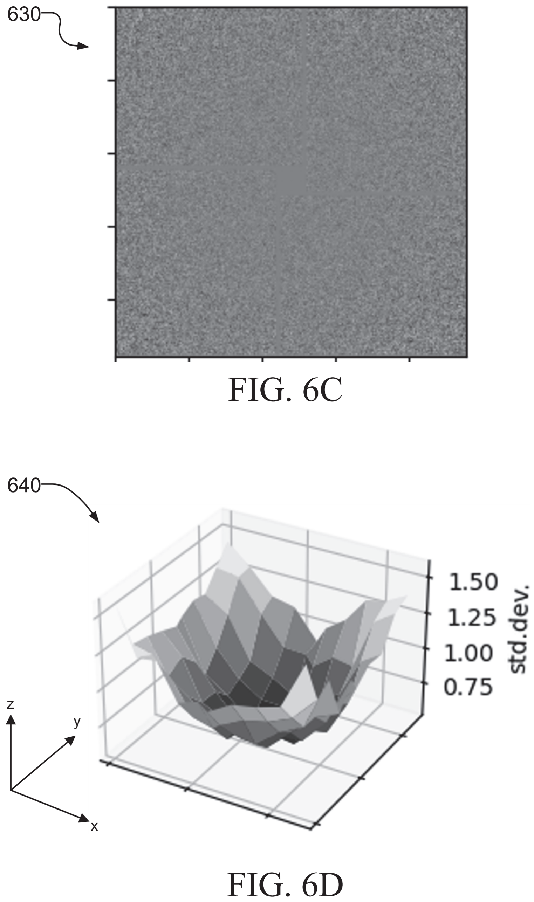

Such variations are shown in FIG. 6C, which represents a difference map 630 of the differences between the pixel values of the first reference EBSD image 610 and the second reference EBSD image 620. The pixel values shown in the difference map 630 thus may be regarded as representing the localized noise levels associated with each of the first reference EBSD image 610 and the second reference EBSD image 620.

FIG. 6D illustrates a contour plot 640 corresponding to the difference map 630 of FIG. 6C as visualized in three dimensions. Specifically, for each pixel location of the contour plot 640 (with corresponding x, y coordinates in FIG. 6D), the corresponding characteristic noise level (z coordinate in FIG. 6D) represents the standard deviation of an 11-pixel by 11-pixel sub-group of pixel values of the difference map 630 that is centered on the pixel location. As shown in FIG. 6D, the noise profile characterizing the first reference EBSD image 610 of FIG. 6A and the second reference EBSD image 620 of FIG. 6B may be characterized by a paraboloid function. Fitting the contour plot 640 to such a functional form thus may yield a functional representation that represents the characteristic noise level associated with each pixel location of an EBSD image.

With reference to equation 11, the weight factors $w(\vec{p}, D)$ may be based upon the measured characteristic noise levels in any suitable manner. As an example, the weight factors may be defined by $w^2(\vec{p}, D) = \sigma^{-2}(\vec{p}, D)$, where $\sigma(\vec{p}, D)$ represents the noise-induced uncertainty of the term $\Delta(\vec{p}, D)$ in equation 11. In this manner, the numerator of equation 11 may be described as a sum of squares each with a variance of 1, which thus may be characterized by a chi-squared distribution. This implies, among other things, that for a minimization routine that successfully identifies the characteristic DG tensor, the numerator value should be distributed about the number of degrees of freedom given by the number of pixels in the ZOC diminished by 8 (reflecting the 8 fit parameters). A numerator value far from this expectation is likely to signal minimization failure.

As discussed above with reference to FIGS. 6A-6D, the noise-induced uncertainty associated with a given pixel location can be associated with a measured and/or assumed characteristic noise level associated with the pixel location. In general, the noise-induced uncertainty associated with a given pixel difference $\Delta(\vec{p}, D) = g(\vec{p} + \vec{u}(\vec{p}, D)) - f(\vec{p})$ thus may depend upon the noise-induced uncertainty $\sigma_f(\vec{p})$ associated with the pixel location $\vec{p}$ in the reference image as well as the noise-induced uncertainty $\sigma_g(\vec{p} + \vec{u})$ associated with the shifted pixel location $\vec{p} + \vec{u}$ in the test image. As an example, the noise-induced uncertainty associated with a given pixel difference may be given by

$$\sigma^2(\vec{p}, D) = \sigma_f^2(\vec{p}) + \sigma_g^2(\vec{p} + \vec{u}(\vec{p}, D)).$$

As discussed above, the characteristic DG tensor may be described as that which best characterizes the specimen deformations that cause the test image to differ from the reference image. The characteristic DG tensor equivalently may be described as that which yields a set of pixel shifts $\vec{u}$ such that the pixel values $f(\vec{p})$ of the reference image are maximally similar to the pixel values $g(\vec{p} + \vec{u})$ of the test image, as quantified, for example, via an objective function. Accordingly, and as discussed above, the characteristic DG tensor may be described as that which minimizes the objective function.

Determining the characteristic DG tensor may include minimizing the objective function in any of a variety of manners, such as using any of a variety of iterative minimization algorithms known in the art. As an example, the objective function may be minimized via a Nelder-Mead method, which also may be referred to as a downhill simplex method. In such a method, at an initial step of an iterative routine, a simplex is constructed with each vertex of the simplex representing one of a plurality of trial DG tensors, and an objective function value associated with each trial DG tensor is calculated. The simplex may then be iteratively modulated via modification of one or vertices (representing a modification of the corresponding trial DG tensor(s)) at each step of the iterative routine based on the corresponding objective function values. By iteration, the simplex may then converge upon a point corresponding to a minimum objective function value, which thus may be described as representing the characteristic DG tensor. Aspects of such a minimization method are discussed in more detail below.

In general, a DG tensor can include nine components that collectively represent rotations, shear strains, and normal strains in the specimen crystalline structure. As discussed above, the EBSD image shifts are insensitive to hydrostatic deformation; accordingly, a strain analysis may pertain to only eight components of the DG tensor. For the purpose of strain analysis, a DG tensor may be parameterized as:

$$D = \begin{pmatrix} p_6 & p_0 + p_3 & p_1 + p_4 \\ -p_0 + p_3 & p_7 & p_2 + p_5 \\ -p_1 + p_4 & -p_2 + p_5 & 0 \end{pmatrix}, \qquad (12)$$

where $p_0, \ldots, p_7$ are independent deformation parameters. The choice of $D_{33} = 0$ can be regarded as fixing the $\lambda$ parameter in equation 9. For infinitesimally small deformations, the deformation parameters $p_0$, $p_1$, and $p_2$ correspond to rotations, the deformation parameters $p_3$, $p_4$, and $p_5$ correspond to shear strains, and the deformation parameters $p_6$ and $p_7$ correspond to normal strains.

The eight independent deformation parameters of a DG tensor thus represent the eight components characterizing each vertex of the simplex used at each iteration of the Nelder-Mead method. Stated differently, the simplex may be described as representing a structure occupying an eight-dimensional vector space with each vertex represented as a vector whose components are the eight independent deformation parameters $p_0, \ldots, p_7$ of a corresponding DG tensor. Each simplex can be defined by nine such vertices. In this manner, each vertex of the simplex may be described as being isomorphic to the corresponding DG tensor when the DG tensor is parameterized as per equation 12. Accordingly, in the present disclosure, the vertices of a simplex of the Nelder-Mead method may be described as corresponding to respective DG tensors (e.g., trial DG tensors) and/or as being the respective DG tensors.

The present disclosure generally relates to examples in which the eight independent deformation parameters $p_0, \ldots, p_7$ characterizing the nonzero components of the DG tensor (equation 12) form the components of each vertex of the corresponding simplex. The optimized deformation parameter values as determined via the iterative routine may then be converted into the DG tensor component values $D_{ij}$ as per equation 12. In other examples, the components of each vertex of the corresponding simplex equivalently may be the eight nonzero DG tensor component values $D_{ij}$, which in turn may be converted into the independent deformation parameters $p_0, \ldots, p_7$ after optimization.

In general, it is not guaranteed that performing the Nelder-Mead method with an arbitrarily selected initial simplex will result in convergence upon a global minimum of the objective function value. Accordingly, the set of trial DG tensors representing the initial simplex may be identified and/or calculated in a manner that seeks to ensure convergence upon such a global minimum.

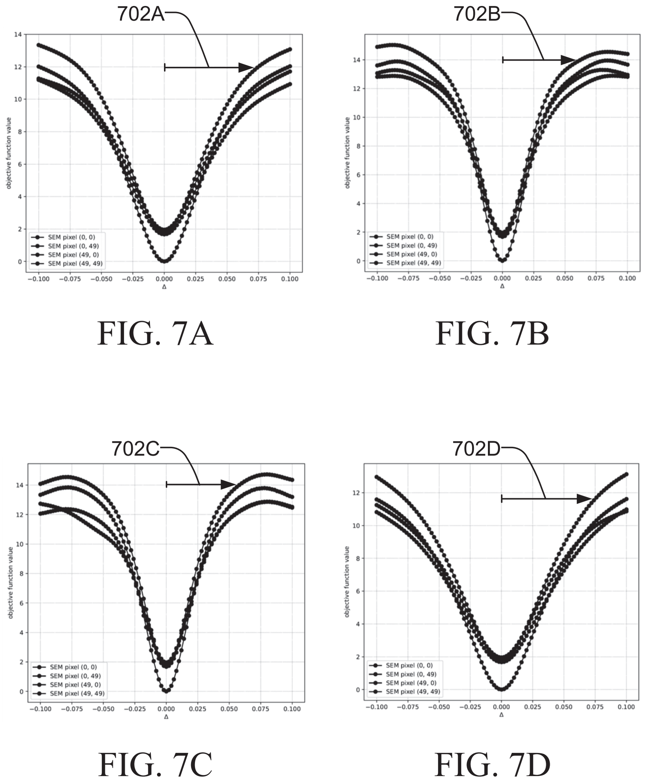

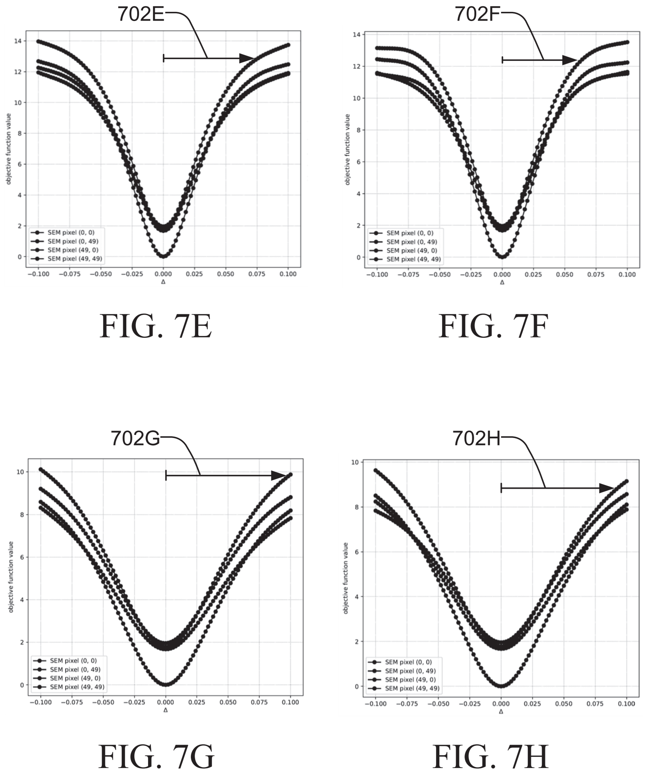

FIGS. 7A-7H are plots representing characteristics of the "shape" of the objective function near the minimum value of the objective function. Each of FIGS. 7A-7H corresponds to a respective deformation parameter $p_0, \ldots, p_7$ of a DG tensor, and each of the four lines represented in each of FIGS. 7A-7H represents a corresponding location of the specimen. In particular, each of FIGS. 7A-7H corresponds to an example in which, for each location of the specimen, a characteristic DG tensor was previously identified, having eight corresponding optimized DG tensor components. Each of FIGS. 7A-7H illustrates the effect on the objective function value of varying the corresponding DG tensor component away from the optimized DG tensor component by a deformation parameter displacement represented on the x-axis.

With reference to each of FIGS. 7A-7H, the objective function dependence on the corresponding deformation parameter may be characterized by a respective convergence radius 702A-702H. In particular, each convergence radius 702A-702H can represent a radius of a range of deformation parameter displacements within which the corresponding optimized deformation parameter value corresponds to the only local minimum of the objective function value. Additionally, or alternatively, each convergence radius 702A-702H can represent a radius of a range of deformation parameter displacements within which the objective function value slopes toward the minimum value associated with the corresponding optimized deformation parameter.

To account for various possible precise definitions of the convergence radius, the convergence radii 702A-702H labeled in FIGS. 7A-7H are intended to be representative of the magnitude of the convergence radius without requiring or implying a specific definition. With either definition of the convergence radius stated above, for example, it may be seen in FIGS. 7A-7H that the convergence radii 702A-702H in this example are at least 0.05. Accordingly, performing an iterative minimization algorithm to determine a minimum objective function value may be expected to converge upon the global minimum objective function value when each deformation parameter corresponding each initial DG tensor differs from the (to be determined) optimized deformation parameter by at most 0.05.

In many cases, an initial DG tensor may be selected such that one or more of the deformation parameters violates the condition that each initial deformation parameter component differs from a corresponding optimized deformation parameter by at most a convergence radius value (e.g., 0.05). In a wide range of practical applications, this condition may be satisfied with respect to the DG tensor strain parameters $p_3, \ldots, p_7$ even with a relatively trivial initial DG tensor, such as a zero tensor. In many practical applications, however, the DG tensor rotation parameters $p_0, p_1, p_2$ of the characteristic DG tensor differ from corresponding parameters of the identity tensor by an amount greater than the convergence radius. Accordingly, to ensure convergence of the objective function minimization routine outlined above, it may be desirable to initially perform a rotation space search to identify suitable initial tensor rotation parameters that are expected to differ from the corresponding optimized deformation parameters by no more than the convergence radius value.

In broad terms, a rotation space search can include calculating the objective function value for each of a discrete plurality of DG tensor rotation parameters and/or combinations thereof. The plurality of DG tensor rotation parameters may be described as forming a grid, or mesh, in an n-dimensional vector space, where n represents the number of DG tensor rotation parameters to be searched. For example, the present disclosure generally relates to examples in which the DG tensor includes three DG tensor rotation parameters, which correspond to three independent components characterizing a rotational deformation in three dimensions. It is to be understood, however, that more or fewer than three rotational components may be used and/or searched, in a manner analogous to that described herein.

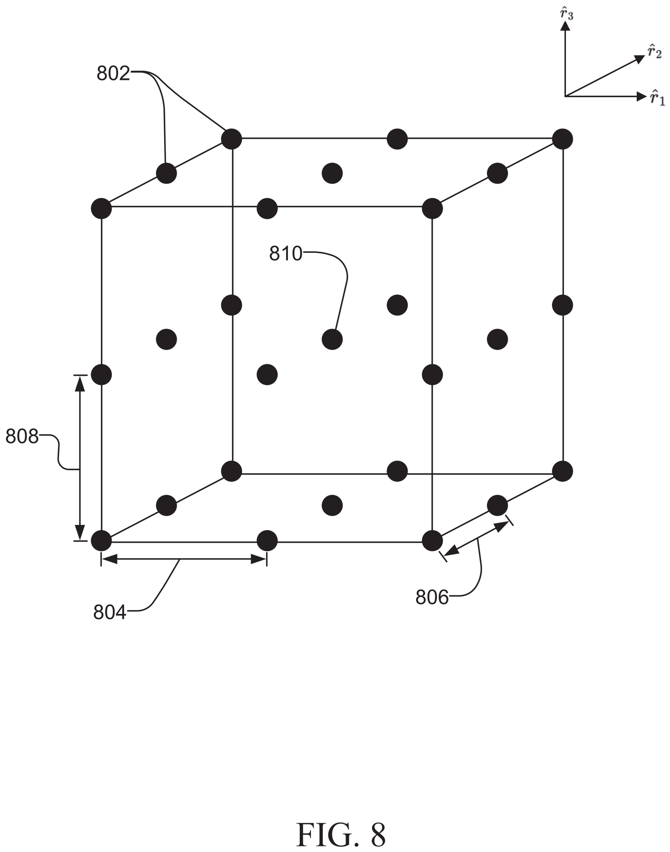

FIG. 8 illustrates an example of a mesh of various combinations of DG tensor rotation parameters. Each combination of DG tensor rotation parameters may be referred to herein as a trial rotation vector 802, which (in the example of FIG. 8) is characterized by rotational transformation components corresponding to each of a first rotational dimension $\widehat{r_1}$, a second rotational dimension $\widehat{r_2}$, and a third rotational dimension $\widehat{r_3}$. Accordingly, each trial rotation vector 802 may be expressed in the form

$$\vec{r} = r_1\widehat{r_1} + r_2\widehat{r_2} + r_3\widehat{r_3}, \qquad\qquad (13)$$

where $r_1, r_2$, and $r_3$ correspond to the rotational transformation components. In some examples, the rotational transformation components can correspond to the DG tensor rotation parameters, e.g., such that $r_1 = p_0, r_2 = p_1$, and $r_3 = p_2$.

For purposes of visualization, FIG. 8 depicts the rotational dimensions $\widehat{r_1}, \widehat{r_2}$, and $\widehat{r_3}$ as representing mutually orthogonal spatial dimensions; it is to be understood, however, that the rotational dimensions may correspond to components of any suitable rotational parameterization, such as Euler angles. In this manner, the term "dimension" is intended here to refer to the mutually independent nature of these parameters.

While the trial rotation vectors 802 of FIG. 8 are represented as points in a rotational vector space, it is to be understood that these trial rotation vectors 802 may be measured relative to any suitable origin point in the rotational vector space. For example, in the example of FIG. 8, the trial rotation vector labeled 810 may have all corresponding rotational transformation components set to zero, and thus may be referred to as an origin vector 810 and/or as a null vector 810. In other examples, the origin of the rotational vector space (i.e., the point at which all rotational transformation components are equal to zero) may not correspond to a trial rotation vector 802 representing a point to be tested.

The trial rotation vectors 802 may be distributed in the rotational vector space in any of a variety of manners. For example, and as shown in FIG. 8, adjacent trial rotation vectors 802 that differ only in the first rotational component $r_1$ may be spaced apart by a first rotational component interval 804. Similarly, adjacent trial rotation vectors 802 that differ only in the second rotational component $r_2$ may be spaced apart by a second rotational component interval 806. Similarly, adjacent trial rotation vectors 802 that differ only in the third rotational component $r_3$ may be spaced apart by a third rotational component interval 808. In some examples, the first rotational component interval 804, the second rotational component interval 806, and the third rotational component interval 808 are equal to one another. This is not required of all examples, however.

In practice, the set of trial rotation vectors 802 to be searched may be generated at least partially based upon a user input. For example, a user can input a range of rotations expected to be present in the specimen, such as may be characterized by a maximum expected rotation magnitude $r_{max}$. In general, the expected range of rotations may be different for each rotational component $r_i$; accordingly, in some examples, the user may input a different maximum expected rotation magnitude $r_{max,i}$ corresponding to each rotational component. The rotation space can then be constrained to encompass only trial rotation vectors 802 whose rotational transformation components satisfy $-r_{max,i} < r_i < r_{max,i}$ for $i = 1, 2, 3$. A mesh of trial rotation vectors 802 may then be constructed such that the distance between any point $\vec{q} = (q_1, q_2, q_3)$ in the 3D rotation space and the nearest trial rotation vector $\vec{r} = (r_1, r_2, r_3)$ is such that $|q_i - r_i| \leq \delta$ for $i = 1, 2, 3$. In this manner, each of the first rotational component interval 804, the second rotational component interval 806, and the third rotational component interval 808 may be no greater than $2\delta$.

The full set of trial rotation vectors 802 may then be expressed as the set of all vectors $(r_1, r_2, r_3)$ for which every

rotational transformation component $r_i$ is contained in the set

$$\Gamma = \left\{ r \left( \frac{1 + 2j}{n} \right) - 1 \right\} \text{ for } j = 0, \dots, n - 1, \qquad (14)$$

$$n = \text{ceil} \left( \frac{r}{\delta} \right), \qquad (15)$$

where "ceil" represents the next highest integer.

In an example in which the first rotational component interval 804, the second rotational component interval 806, and the third rotational component interval 808 are not identical to one another, the value $\delta$ similarly may differ for each rotational dimension. Accordingly, in such examples, the set $\Gamma$ may be defined for each rotational dimension as $\Gamma_i(r_i, \delta_i)$ in the manner of equation 14.

The value of $\delta$ may be selected such that at least one trial rotation vector is expected to reside within a convergence region of the objective function value. For example, as discussed above in the context of FIGS. 7A-7H, the convergence radius of a deformation parameter displacement (e.g., corresponding to a rotational deformation parameter) can define a convergence region of deformation parameter displacement. It is desirable to identify a trial rotation vector whose rotational transformation components each reside within a corresponding convergence region. Specifically, using such a trial rotation vector as an initial point in a numerical minimization routine can ensure that the minimization identifies the global minimum objective function value for each rotational transformation component.

To ensure that the mesh of trial rotation vectors includes at least one such vector, one may select the value of $\delta$ to be smaller than the objective function value convergence radius of the corresponding component. For example, for a rotational transformation component characterized by an objective function value convergence radius of 0.05, the value of $\delta$ may be selected to be 0.03. The resulting mesh of trial rotation vectors may thus be sufficiently dense that at least one trial rotation vector yields objective function values for each rotational transformation component that are unambiguously lower than the objective function values of the "tails" outside of the convergence radii 702A-702H of FIGS. 7A-7H.

Having generated a full set of trial rotation vectors in this manner, a rotation error factor may be calculated for each of the trial rotation vectors. The rotation error factor may be described as representing a discrepancy between the rotation corresponding to the trial rotation vector and the actual rotation that yields the test image. As an example, each rotation error factor may be calculated as the objective function value as evaluated with respect to a DG tensor that corresponds to each individual trial rotation vector. That is, for each trial rotation vector, a corresponding DG tensor may be generated using deformation parameters that are all set to zero except for those corresponding to the components of the trial rotation vector.

After calculating the rotation error factor associated with each trial rotation vector, one of the trial rotation vectors may be identified as representing an initialization rotation vector. For example, the initialization rotation vector may be identified as the trial rotation vector corresponding to the smallest rotation error factor (e.g., the smallest objective function value). The initial DG tensor may then be determined and/or generated as being the DG tensor corresponding to the initialization rotation vector. Because the initial DG tensor in such an example is populated with tensor components that are based on the initialization rotation vector, the initial DG tensor may be described as representing the rotation that corresponds to the initialization rotation vector. This initial DG tensor may then be used to initialize a minimization routine as discussed above.

Having identified an initial DG tensor according to a rotation space search as discussed above (or otherwise), the initial simplex to be used in a Nelder-Mead minimization routine can constructed such that one vertex corresponds to the initial DG tensor. The remaining eight vertices of the simplex may be determined in any suitable manner, such as via incremental variations of elements (e.g., deformation parameters) of the initial DG tensor.

In particular, it may be desirable to construct the initial simplex such that adjacent vertices are separated by a distance similar to and/or less than a convergence radius as described above. Thus, the remaining eight vertices of the initial simplex can correspond to respective DG tensors that are identical to the initial DG tensor in all deformation parameters but one, which is incremented relative to that of the initial DG tensor by a deformation parameter increment that is similar to and/or less than the convergence radius. As a more specific example, the convergence radius may be approximately 0.05, and the deformation parameter increment may be 0.02. The resulting initial simplex may thus be sufficiently "small" in the eight-dimensional vector space to be expected to converge upon the intended global minimum of the objective function value.

As discussed above, in an initial iterative step of the Nelder-Mead method, an objective function value may be calculated for each of the nine trial DG tensors representing the vertices of the simplex. At each subsequent step of the iterative routine, one of the trial DG tensors (e.g., that associated with the greatest objective function value) can be manipulated through the eight-dimensional vector space according to prescribed rules to yield updated objective function values. At each such step, however, the objective function value need not be recalculated for the trial DG tensors that are not being manipulated in that step. Accordingly, each step of the iterative routine may include calculating an objective function value only once or a small number of times (e.g., a number smaller than the number of trial DG tensors forming the simplex). In this manner, the Nelder-Mead method may offer computational advantages over alternative minimization methods that necessitate calculating a multidimensional gradient of the objective function at each iterative step.

Through iteration, the Nelder-Mead method can modify the vertices of the simplex until a convergence criterion is met to indicate that a minimum (or sufficiently small) objective function value has been identified. Such a convergence criterion may be defined in any of a variety of manners. For example, at the conclusion of each iterative step, the maximum and/or minimum objective function values corresponding to the vertices of the resulting simplex may be identified. The convergence criterion then may be satisfied when a difference between the maximum and minimum objective function associated with a given simplex falls below a threshold difference; when a difference between the maximum objective function value associated with a given simplex and the maximum objective function value associated with the simplex of the prior step falls below a threshold difference; when the objective function values associated with all vertices of a given simplex fall below a threshold variance relative to one another; etc. In such examples, a "difference" between two values may be calculated as an absolute difference and/or a difference expressed as a proportion of either individual value.

Once the convergence criterion is met, the final simplex associated with the final iterative step of the Nelder-Mead method may be used to identify the characteristic DG tensor. For example, the final simplex can be the simplex that is associated with the smallest calculated objective function value. The characteristic DG tensor may then be determined such that the components of the characteristic DG tensor are generated from the deformation parameters that represent the vertices of the final simplex.

As another example, the "point" in the eight-dimensional vector space that corresponds to a true global minimum of the objective function value may reside within the volume of the final simplex rather than at one of its vertices. Accordingly, it may be desirable to generate the characteristic DG tensor such that one or more deformation parameters of the characteristic DG tensor are different from (though preferably close to) corresponding elements of the vertex of the final simplex associated with the smallest calculated objective function value.

As yet another example, the characteristic DG tensor may be generated such that the deformation parameters of the characteristic DG tensor are taken as the components of a vertex of the final simplex other than that which is associated with the smallest calculated objective function value.

In all such examples, the characteristic DG tensor may be described as corresponding to a simplex vertex (and/or to an associated trial DG tensor) that is associated with an objective function value that satisfies the convergence criterion.

In some examples, after determining the characteristic DG tensor corresponding to a given test EBSD image, this method may be repeated with respect to another test EBSD image from the same specimen and/or a similar specimen. In such examples, some computational efficiency may potentially be gained by reusing one or more elements of the previously determined characteristic DG tensor and/or associated intermediate calculations in the determination of the subsequent characteristic DG tensor. For example, one may assume that the initial DG tensor identified with respect to the first test EBSD image also may be used to initialize the minimization routine with respect to the subsequent EBSD image. It should be appreciated, however, that such a simplification may introduce biases when the previous result is not suitable for the subsequent minimization. Accordingly, to ensure the fidelity of the calculated characteristic DG tensor, it may be desirable to repeat all applicable steps described above with respect to each test EBSD image under consideration.

While the present disclosure generally relates to examples in which the objective function value is minimized via a Nelder-Mead method, it is to be understood that any of a variety of iterative algorithms may be used to identify the characteristic DG tensor. For example, a characteristic DG tensor corresponding to a minimized (or otherwise sufficiently small) objective function value via any suitable iterative minimization algorithm known to the art, such as a gradient descent method, a simulated annealing method, a conjugated gradients method, and adaptive moment estimation method, a genetic algorithm method, etc. Additionally, or alternatively, the characteristic DG tensor may be identified via an iterative algorithm that seeks to maximize one or more properties associated with the characteristic DG tensor, such as a metric of similarity between the reference image and the modulated image corresponding to the characteristic DG tensor.

Upon identifying the characteristic DG tensor, the elements of the characteristic DG tensor may be processed and/or analyzed to yield information regarding the deformations of the specimen. For example, the characteristic DG tensor $D$ can be decomposed into a symmetric part $\varepsilon$ and an anti-symmetric part $\omega$ as follows:

$$\varepsilon = \frac{D + D^T}{2}, \qquad\qquad (16)$$

$$\omega = \frac{D - D^T}{2}. \qquad\qquad (17)$$

For infinitesimally small deformations, $\omega$ can be interpreted as a rotation tensor and $\varepsilon$ can be interpreted as a strain tensor. Specifically, the diagonal elements of the strain tensor $\varepsilon$ can correspond to normal strains, while the off-diagonal elements can correspond to shear strains.

For larger deformations, a polar decomposition may be applied to the characteristic DG tensor $D$:

$$I + D = SR, \qquad (18)$$

where $S$ is a symmetric matrix and $R$ is an orthogonal matrix, thus representing rotations. For convenience, a rotation tensor may be defined as $R - I$ and a stretch tensor may be defined as $S-I$. In the case of small deformations, the rotation and stretch tensors reduce to the tensors $\omega$ and $\varepsilon$, respectively, as defined above in equations 16-17.

From a strain represented from a characteristic DG tensor $D$, the stress causing the deformation can be deduced via Hooke's law:

$$\sigma = C\varepsilon, \qquad (19)$$

where $\sigma$ is a symmetric rank-2 tensor representing the stress and $\varepsilon$ is the symmetric part of the characteristic DG tensor as defined in equation 16. $C$ refers to a rank-4 tensor, which may be simplified due to symmetries. In particular, in an example, equation 19 may be rewritten as follows:

$$\begin{pmatrix} \sigma_{11} \\ \sigma_{22} \\ \sigma_{33} \\ \sigma_{23} \\ \sigma_{31} \\ \sigma_{12} \end{pmatrix} = \begin{pmatrix} c_{11} & c_{12} & c_{12} & 0 & 0 & 0 \\ c_{12} & c_{11} & c_{12} & 0 & 0 & 0 \\ c_{12} & c_{12} & c_{11} & 0 & 0 & 0 \\ 0 & 0 & 0 & c_{44} & 0 & 0 \\ 0 & 0 & 0 & 0 & c_{44} & 0 \\ 0 & 0 & 0 & 0 & 0 & c_{44} \end{pmatrix} \begin{pmatrix} \varepsilon_{11} \\ \varepsilon_{22} \\ \varepsilon_{33} \\ \varepsilon_{23} \\ \varepsilon_{31} \\ \varepsilon_{12} \end{pmatrix}, \qquad (20)$$

where $c_{ij}$ are known elasticity constants corresponding to the material of the specimen. It is to be understood that equation 20 represents a non-exclusive parameterization of the tensor $C$ and that other parameterizations may be used.

As discussed above in the context of equation 12, the $D_{33}$ component of the DG tensor may be fixed for purposes of determining the characteristic DG tensor. Since the EBSD technique probes only the surface of the specimen, one may employ an assumption that no stress is applied perpendicular to the surface of the specimen to recover this component. With reference to equation 9, the parameter $\lambda$ may be determined by imposing the condition

$$\vec{n}^{T}\sigma\vec{n} = 0, \qquad (21)$$

where $\vec{n}$ represents the unit vector perpendicular to the surface of the specimen. The solution reads

$$\lambda = \frac{\vec{n}^{T}CI\vec{n}}{\vec{n}^{T}C(\varepsilon + I)\vec{n}}. \qquad (22)$$

The full expressions of the DG tensor and the stress tensor may thus be obtained by combining equation 22 with equations 9 and 20, respectively.

The precision and/or accuracy of the strain components determined via methods according to the present disclosure generally are based on a variety of factors. For example, the lower limit of the strain values that may be accurately detected and/or represented according to these methods is strongly influenced by the quality (e.g., resolution, noise level, etc.) of the reference EBSD image and the test EBSD image. A statistical study based on dynamical simulation of EBSD images with a resolution of about 500 x 500 pixels indicates that this lower limit is of the order $10^{-4}$.

The upper limit to the strain values that may be accurately detected and/or represented by methods according to the present disclosure may be based primarily on two factors: (1) the ability to identify a suitable initial DG tensor for the minimization routine; and (2) the existence of sufficient overlap between the reference EBSD image and the modulated test EBSD image (e.g., the number of pixels included in the ZOC). The first factor is at least partially addressed via the rotational space search described above with respect to identifying the initial DG tensor. The effect of the second factor may be characterized in the fact that a decreasing overlap between the reference EBSD image and the modulated test EBSD image will correspond with a greater degree of uncertainty in the quantities calculated based on this overlap. A statistical study based on dynamical simulation of EBSD images with a resolution of about 500 x 500 pixels yields competitive uncertainties for rotational components of the DG tensor up to 0.5 and non-rotational components up to a few times $10^{-2}$.

In various examples, analysis of a test image and a reference image additionally may yield information regarding the quantitative uncertainty in the characteristic DG tensor components and/or the strain components determined as described herein. For example, having identified the characteristic DG tensor as that which minimizes the objective function value, the behavior of the objective function value may be analyzed as one or more components of the characteristic DG tensor are varied relative to the values that minimize the objective function. Such analysis can yield a characterization of the curvature of the objective function in various dimensions corresponding to the DG tensor components that are varied. These variations may be quantified, for example, in the form of a matrix of second derivatives of the objective function value with respect to the various DG tensor components.

Having characterized the shape of the objective function around the minimum value in this manner, one may calculate uncertainties in one or more of the DG tensor components, such as by determining component variations that increase the objective function value by a selected interval (e.g., by one). The quantitative uncertainties in the characteristic DG tensor components then may be translated into corresponding uncertainties in the corresponding strain tensor components and/or the corresponding stress tensor components via traditional error propagation techniques.

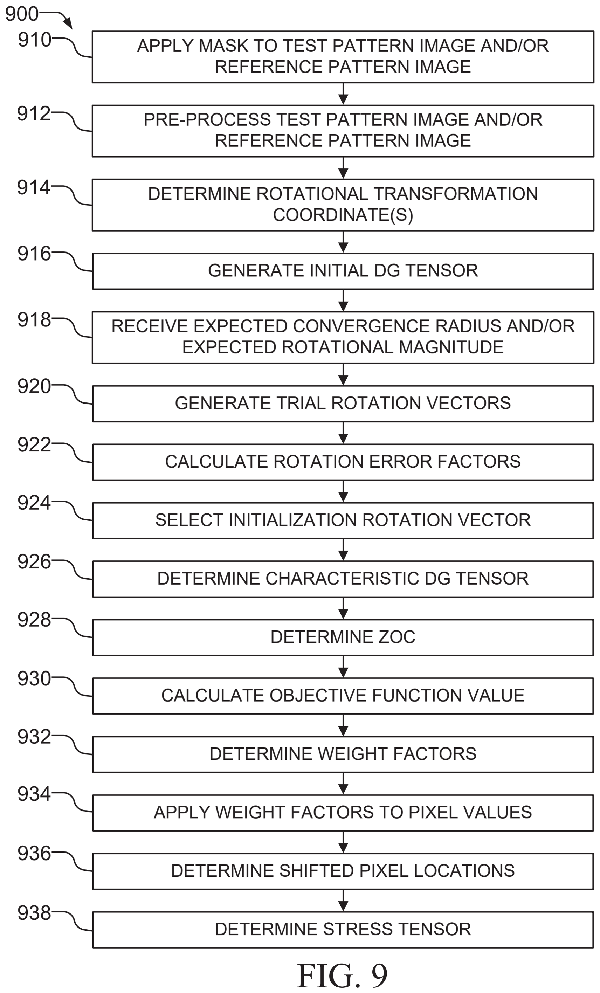

FIG. 9 is a flow chart depicting examples of a method 900 of determining a deformation characteristic of a test image relative to a reference image. In various examples, the method 900 is performed, at least in part, by a controller, such as the controller 150 of FIG. 1. Additionally, or alternatively, the method 900 may be performed, at least in part, by and/or in conjunction with an SEM system, such as the SEM 100 of FIG. 1.

Any of the components, images, mathematical structures, etc. discussed and/or described herein with reference to the method 900 may be understood as representing and/or referring to similarly named elements of any of FIGS. 1-8 and/or of the foregoing disclosure.

As shown in FIG. 9, the method 900 includes determining, at 926 and via an iterative routine, a characteristic DG tensor that characterizes the deformation characteristic. As an example, the test image may be a test EBSD image and the reference image may be a reference EBSD image. The deformation characteristic may be a strain of a reference specimen location that yielded the test EBSD image relative to that of a test specimen location that yielded the reference EBSD image. In such examples, the characteristic DG tensor can include tensor components that correspond to a strain of the specimen at the test specimen location.

As discussed above with reference to equation 12, a DG tensor can equivalently be characterized via a set of deformation parameters $p_0, ... , p_7$ or via a set of DG tensor components $D_{ij}$. Accordingly, the determining the characteristic DG tensor at 926 can include and/or refer to determining the DG tensor components and/or determining the deformation parameters.

As shown in FIG. 9, the determining the characteristic DG tensor at 926 can include, at one or more steps of the iterative routine, calculating, at 930, an objective function value associated with a trial DG tensor. Specifically, the calculating the objective function value at 930 can include calculating such that the objective function value is based, at least in part, on pixel values of pixels that are within a ZOC of the test image and/or of the reference image. In some such examples, the ZOC is determined automatically based at least in part on the trial DG tensor, as described herein. In various examples, the calculating the objective function value at 930 includes calculating such that the objective function value is a scalar quantity.

In some examples, the calculating the objective function value at 930 includes calculating based on a single ZOC with respect to the reference image or with respect to the test image. That is, and as described herein, a single ZOC can be described as encompassing a specific set of pixel locations of the reference image and a corresponding set of pixel locations of the test image. Such examples may thus be described in contrast with alternative methods in which an objective function value is calculated based on a plurality of regions of interest associated with one or both of the images under consideration.

Additionally, or alternatively, the calculating the objective function value at 930 can include calculating such that, for each pixel location of the reference image within the ZOC, the objective function calculation (e.g., using equation 11) refers to the pixel value corresponding to the pixel location exactly once. Such examples may thus be described in contrast with alternative methods in which an objective function value is calculated based on a plurality of regions of interest that are at least partially overlapping. In such alternative methods, pixel locations within such overlapping regions of interest may factor into a given objective function calculation multiple times, thereby introducing a bias into the objective function calculation. Accordingly, in contrast with such alternative methods, the method 900 may be performed such that the objective function value is not disproportionately based on any given region of the test image or the reference image.

In various examples, and as shown in FIG. 9, the method 900 includes, at each step of the one or more steps of the iterative routine, determining, at 928, the ZOC. In this manner, the definition of the ZOC may be repeatedly updated during the performance of the method 900, such as to ensure that the ZOC at any given step of the iterative routine is specifically tailored to the available and/or relevant data at that step. For example, the determining the ZOC at 928 can include determining such that the ZOC represents a maximally overlapping set of pixel locations between the pixel locations of the reference image and shifted pixel locations. The determining the ZOC at 928 thus may be at least partially based upon the trial DG tensor that is used to determine the shifted pixel locations. As a more specific example, such a maximally overlapping set of pixel locations may include all pixel locations at which the corresponding pixel values are defined and are not masked by a pre-processing routine. The determining the ZOC at 928 can be performed automatically and/or without user input.

In some examples, the determining the ZOC at 928 includes, for each pixel location $\vec{p}$ of at least a subset of the pixel locations of the reference image, calculating, using the trial DG tensor, a pixel shift $\vec{u}$. In such examples, the determining the ZOC at 928 can include including the pixel location $\vec{p}$ in the ZOC only if the pixel location $\vec{p}$ corresponds to a pixel location of the reference image with a defined and/or unmasked pixel value and a shifted pixel location $\vec{p} + \vec{u}$ corresponds to a pixel location of the test image with a defined and/or unmasked pixel value.

In various examples, the calculating the objective function value at 930 includes applying, at 934, respective weight factors to the pixel values included in the calculation of the objective function value. In such examples, the respective weight factors may be based, at least in part, on the test image and/or the reference image. For example, and as discussed above, the respective weight factors may be at least partially based upon a measured localized noise level of the test image and/or the reference image.

Accordingly, in some examples, the method 900 includes determining, at 932, the respective weight factors. The determining the weight factors at 932 can include analyzing the test image and/or the reference image, such as by analyzing a location-dependent noise level associated with the test image and/or the reference image. As a more specific example, analyzing the test image can include analyzing a plurality of sample test images to evaluate noise characteristics of the test image. Similarly, analyzing the reference image can include analyzing a plurality of reference images to evaluate noise characteristics of the reference image. Examples of such analyses are discussed above with reference to FIGS. 6A-6D.

In some examples, the determining the weight factors at 932 includes determining a functional representation of the weight factors as a function of the pixel location. For example, as discussed above with reference to FIG. 6D, an analysis of localized noise levels in the reference image can be used to generate a set of data that may be fitted to a functional representation (e.g., a paraboloid function), which in turn may be used to generate the weight factors associated with each pixel location as described herein.

In some examples, and as discussed above with reference to equation 11, the calculating the objective function value at 930 includes calculating such that the objective function value is normalized against a number of pixel locations within the ZOC. In particular, in the case of equation 11, this normalization comes in the form of a denominator that represents a sum of the squared weight factors associated with each pixel location in the ZOC. Such a normalization thus may allow for the direct comparison of objective function values that are calculated with respect to distinct ZOCs, such as ZOCs encompassing different numbers of pixel locations.

In some examples, and as described in more detail above, the calculating the objective function value at 930 can include calculating based on comparing pixel values at pixel locations of the reference image to pixel values at corresponding shifted pixel locations of the test image. In particular, in some examples, the calculating the objective function value at 930 includes, in each step of the iterative routine, for each individual trial DG tensor and for each pixel location with the ZOC of the reference image, determining, at 936, a shifted pixel location of the test image. The determining the shifted pixel locations at 936 may be based on the individual trial DG tensor under consideration. Accordingly, in such examples, the calculating the objective function value at 930 can include calculating such that the objective function value represents a weighted average difference between pixel values of the pixel locations of the reference image within the ZOC and pixel value of the shifted pixel locations of the test image.

As discussed above, the determining the ZOC at 928 can be at least partially based on the shifted pixel locations of the test image. Accordingly, in some examples, the determining the ZOC at 928 includes, in each step of the iterative routine and for each individual trial DG tensor, determining the ZOC based on the individual trial DG tensor.

As described above, each step of the iterative routine may include performing the calculating the objective function value at 930 only once or a small number of times (e.g., a number smaller than the number of trial DG tensors forming the simplex). Stated differently, in at least one step of the iterative routine, the one or more trial DG tensors for which the objective function is calculated can consist of fewer DG tensors than the number of elements of each DG tensor that are varied in each step of the iterative routine. Such a method thus offers computational advantages over alternative minimization methods that necessitate calculating a multidimensional gradient of the objective function at each iterative step. For example, such alternative methods may necessitate calculating an objective function a number of times at each step of the iterative process that is at least equal to the number of elements of the DG tensor.

In some examples, the method 900 can include various steps for preparing the test image and/or the reference image for analysis. For example, and as shown in FIG. 9, the method 900 can include applying, at 910, a mask to the test image and/or the reference image, such as to exclude selected pixel locations from inclusion in the ZOC. As discussed above, the applying the mask at 910 can include masking the test image and/or the reference image to remove and/or exclude data that is known to not represent meaningful information, such as pixels corresponding to invalid content (e.g., corresponding to broken hardware, contamination on the detector, etc.) and/or pixels representing locations out of a detector coverage range. The applying the mask at 910 may be performed prior to the determining the characteristic DG tensor at 926.

The applying the mask at 910 may be performed in any suitable manner, such as by assigning the pixel values of pixels to be masked to a predetermined value, by removing such pixels from the image altogether, by labeling such pixels as being masked, etc. In some examples, the applying the mask at 910 includes, for each of the test image and the reference image, determining a set of masked pixel locations. For example, the masked pixel locations can correspond to pixel coordinates of pixels that are known not to represent meaningful information. In some examples, such masked pixel locations are the result of systematic factors (e.g., blind spots and/or detector contamination) such that at least some of the masked pixel location of the test image and of the reference image are the same pixel locations.

In various examples, the set of masked pixel locations of the test image and/or of the reference images is static during the subsequent determining the characteristic DG tensor at 926. It should be noted, however, that the effect of the masked pixel locations on the ZOC that determined via the determining the ZOC at 928 can vary as the iterative routine progresses. In particular, at each iteration of the determining the ZOC at 928, the ZOC may include only pixel locations that corresponding to unmasked pixel locations of the reference image and that also correspond to unmasked shifted pixel locations of the test image. Because the pixel shifts depend upon the trial DG tensor under consideration at each iteration, the set of pixel locations that satisfy both of these conditions also vary with the trial DG tensor. Accordingly, at least a portion of the evolution of the ZOC during the iterative determination of the characteristic DG tensor may be attributed to the masked pixel locations.

Additionally, or alternatively, the method 900 can include pre-processing, at 912, the test image and/or the reference image. Such pre-processing may be performed prior to the determining the characteristic DG tensor at 926. As more specific examples, the pre-processing at 912 can include applying Gaussian blurring to the test image and/or to the reference image and/or can include downscaling the test image and/or the reference image. As another example, the pre-processing at 912 can include generating the test image and/or the reference image as an average of a plurality of recorded images, as described herein. In particular, for a plurality of images that are regarded as being identical aside from a random noise contribution, calculating an average image of the plurality of images can suppress the random noise contribution. In some examples, the pre-processing at 912 includes the applying the mask at 910.

In some examples, and as shown in FIG. 9, the method 900 includes, prior to the determining the characteristic DG tensor at 926, generating, at 916, an initial DG tensor to be used in the iterative routine. In such example, the generating the initial DG tensor at 916 may be performed based, at least in part, on the test image and/or the reference image.

The initial DG tensor may be used as the trial DG tensor in at least one step of the iterative routine. As a more specific example, the determining the characteristic DG tensor at 926 can include calculating the objective function value corresponding to each of one or more trial DG tensors in various steps of an iterative routine, and one of the one or more trial DG tensors may be the initial DG tensor.

Additionally, or alternatively, the method 900 may include determining, at 914, one or more rotational transformation components corresponding to the test image. In such examples, the generating the initial DG tensor at 916 may be performed based, at least in part, on the determining the rotational transformation component(s) at 914.

In some examples, the generating the initial DG tensor at 916 and/or the determining the rotational transformation coordinate(s) at 914 includes generating such that the initial DG tensor corresponds to an approximate rotation characterizing the specimen deformation. As a more specific example, and as shown in FIG. 9, the determining the rotational transformation component(s) at 914 and/or the generating the initial DG tensor at 916 can include generating, at 920, a set of trial rotation vectors and calculating at 922, one or more rotation error factors associated with each trial rotation vector.

In some examples, the generating the trial rotation vectors at 920 includes generating such that each trial rotation vector represents one or more corresponding rotational transformation components. The generating the trial rotation vectors at 920 can include generating such that the trial rotation vectors are distributed in a rotational search space in any of a variety of manners. For examples, the generating the trial rotation vectors at 920 can include generating such that the trial rotation vectors are distributed in a three-dimensional vector space with a vector spacing that is based, at least in part, on an expected convergence radius of the objective function value. Additionally, or alternatively, the generating the trial rotation vectors at 920 can include generating such that the trial rotation vectors are distributed in the three-dimensional vector space with a maximum vector magnitude that is based, at least in part, on an expected rotational magnitude associated with the test image. In some such examples, the method 900 additionally includes receiving, at 918 and from a user, the expected convergence radius and/or the expected rotational magnitude.

The generating the initial DG tensor at 916 additionally may include selecting, at 924 and based on the rotation error factors, an initialization rotation vector from the set of trial rotation vectors. For example, and as discussed above, the selecting the initialization rotation vector at 924 may include selecting such that the initialization rotation vector is the trial rotation vector corresponding to the smallest rotation error factor. The generating the initial DG tensor at 916 may then include generating such that the initial DG tensor represents a rotation corresponding to the initialization rotation vector. Further aspects of such methods are described herein with reference to FIG. 8.

In some examples, for each trial rotation vector, the calculating the rotation error factor(s) at 922 includes calculating an objective function value associated with a DG tensor corresponding to the trial rotation vector.

In some examples, the determining the characteristic DG tensor at 926 includes determining such that the characteristic DG tensor corresponds to a trial DG tensor that is associated with an objective function value that satisfies a convergence criterion. Accordingly, the determining the characteristic DG tensor at 926 can include repeating the steps of the iterative routine until the objective function value satisfies such a convergence criterion. Stated differently, the determining the characteristic DG tensor at 926 can include performing an iterative algorithm that operates to identify a trial DG tensor that yields a corresponding objective function value that satisfies a convergence criterion.

As discussed herein, the iterative algorithm can include and/or be any of a variety of algorithms, such as an iterative minimization algorithm and/or a Nelder-Mead minimization algorithm.

As discussed herein, the convergence criterion can include and/or be any of a variety of conditions. For example, with reference to the Nelder-Mead method, the convergence criterion may be satisfied when a difference between the maximum and minimum objective function associated with a given simplex falls below a threshold difference; when a difference between the maximum objective function value associated with a given simplex and the maximum objective function value associated with the simplex of the prior step falls below a threshold difference; when the objective function values associated with all vertices of a given simplex fall below a threshold variance relative to one another; etc. In such examples, a "difference" between two values may be calculated as an absolute difference and/or absolute difference expressed as a proportion of either individual value.

In some examples, and as shown in FIG. 9, the method 900 further includes determining at 938, a stress tensor corresponding to the characteristic DG tensor. The determining the stress tensor at 938 may be based, at least in part, on the characteristic DG tensor, and thus may be performed subsequent to the determining the characteristic DG tensor at 926. The determining the stress tensor 938 may be performed in any suitable manner, such as in the manner discussed above with reference to equations 16-22. In some examples, the determining the stress tensor at 938 includes determining a strain tensor corresponding to the characteristic DG tensor and subsequently determining the stress tensor based, at least in part, on the strain tensor.

In various examples, the method 900 also may include calculating an uncertainty associated with one or more quantities that are determined and/or calculated via other steps of the method 900. For example, the determining the characteristic DG tensor at 926 can include determining a quantitative uncertainty associated with one or more components of the characteristic DG tensor. As a more specific example, determining such uncertainties can include analyzing variations in the objective function value as one or more components of the characteristic DG tensor are varied. As described above, such analysis can include analyzing a curvature (e.g., calculating one or more derivatives) of the objective function in the neighborhood of the functional minimum corresponding to the characteristic DG tensor. In some such examples, the determining the stress tensor at 938 may include determining a quantitative uncertainty associated with one or more components of the stress tensor based, at least in part, on the quantitative uncertainties associated with the characteristic DG tensor.

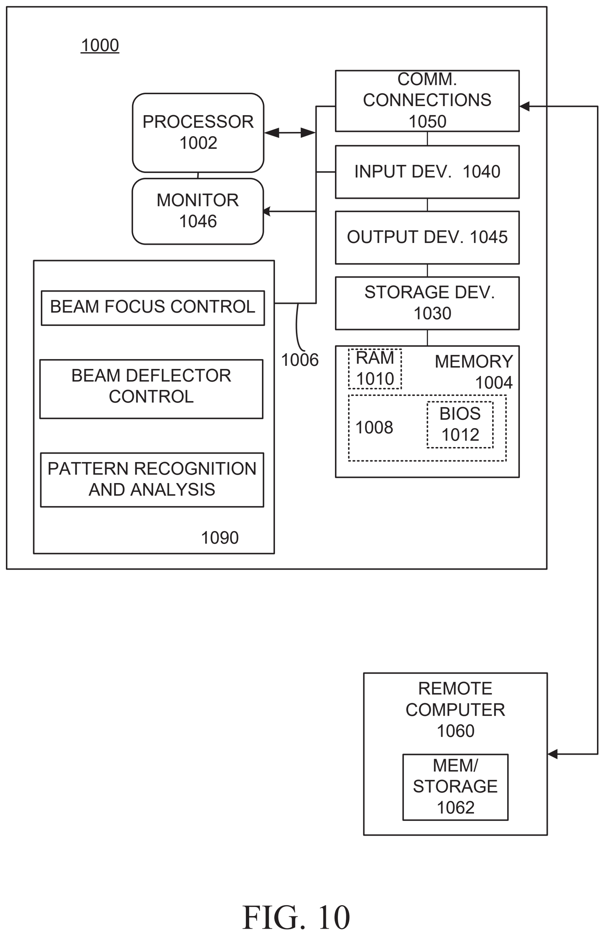

FIG. 10 and the following discussion are intended to provide a brief, general description of an exemplary computing environment in which the disclosed technology may be implemented. In particular, some or all portions of this computing environment can be used with the above methods and apparatus to, for example, focus a charged particle beam upon a specimen, record an EBSD image, and/or perform any portions of the methods disclosed above.

Although not required, the disclosed technology is described in the general context of computer executable instructions, such as program modules, being executed by a personal computer (PC). Generally, program modules include routines, programs, objects, components, data structures, etc., that perform particular tasks or implement particular abstract data types. Moreover, the disclosed technology may be implemented with other computer system configurations, including hand-held devices, tablets, multiprocessor systems, microprocessor-based or programmable consumer electronics, network PCs, minicomputers, mainframe computers, virtual machines, containerized applications, Kubernetes clusters, and the like. The disclosed technology also may be practiced in distributed computing environments where tasks are performed by remote processing devices that are linked through a communications network. In a distributed computing environment, program modules may be located in both local and remote memory storage devices. In some cases, such processing is provided in an SEM system. The disclosed systems can serve to control image acquisition and provide a user interface as well as serve as an image processor.

With reference to FIG. 10, an exemplary system for implementing the disclosed technology includes a general-purpose computing device in the form of an exemplary conventional PC 1000, including one or more processing units 1002, a system memory 1004, and a system bus 1006 that couples various system components including the system memory 1004 to the one or more processing units 1002. Each processing unit 1002 of the one or more processing units 1002 additionally or alternatively may be referred to as a processor 1002, and the one or more processing units 1002 collectively may be referred to as a processor system. The system bus 1006 may be any of several types of bus structures including a memory bus or memory controller, a peripheral bus, and a local bus using any of a variety of bus architectures. The exemplary system memory 1004 includes read-only memory (ROM) 1008 and random-access memory (RAM) 1010. A basic input/output system (BIOS) 1012, containing the basic routines that help with the transfer of information between elements within the PC 1000, is stored in ROM 1008. In various examples, the PC 1000 (and/or one or more components thereof) additionally or alternatively may be referred to as a controller. The PC 1000 may represent an example of at least a portion of the controller 150 of FIG. 1.

The exemplary PC 1000 further includes one or more storage devices 1030 such as a hard disk drive for reading from and writing to a hard disk, a magnetic disk drive for reading from or writing to a removable magnetic disk, and an optical disk drive for reading from or writing to a removable optical disk (such as a CD-ROM or other optical media). Such storage devices can be connected to the system bus 1006 by a hard disk drive interface, a magnetic disk drive interface, and an optical drive interface, respectively. The drives and their associated computer readable media provide nonvolatile storage of computer-readable instructions, data structures, program modules, and other data for the PC 1000. Other types of computer-readable media which can store data that is accessible by a PC, such as magnetic cassettes, flash memory cards, solid-state drives, digital video disks, CDs, DVDs, RAMs, ROMs, and the like, may also be used in the exemplary operating environment.

A number of program modules may be stored in the storage devices 1030 including an operating system, multiple operating systems, virtual operating systems, one or more application programs, other program modules, and/or program data. In some examples, one or more aspects of the methods disclosed herein may be programmed, implemented, encoded, trained, and/or otherwise transferred to the program modules via machine learning, neural networks, artificial intelligence, etc.

The exemplary PC 1000 can include various devices configured for user interface. For example, a user may enter commands and information into the PC 1000 through one or more input devices 1040 such as a keyboard and/or a pointing device such as a mouse. For example, the user may enter commands to initiate image acquisition and/or to initiate one or more methods disclosed herein. Other input devices may include a digital camera, microphone, joystick, game pad, buttons, dials, satellite dish, scanner, or the like. In some examples, several such input devices can be integrated into a single user interface device, such as may be commonly used in conjunction with a CPM system. These and other input devices are often connected to the one or more processing units 1002 through a serial port interface that is coupled to the system bus 1006, but may be connected by other interfaces such as a parallel port, game port, universal serial bus (USB), or wired or wireless network connection. A monitor 1046 or other type of display device is also connected to the system bus 1006 via an interface, such as a video adapter, and can display, for example, one or more images of a sample or specimen prior to, subsequent to, and/or during performance of one or more methods disclosed herein. The monitor 1046 can also be used to select sections for processing or particular image alignment and alignment procedures such as correlation, feature identification, and preview area selection or other image selection. Other peripheral output devices, such as speakers and printers (not shown), may be included. The input device 1040 may represent an example of the user interface 160 and/or the user input device 162 of FIG. 1. Additionally, or alternatively, the monitor 1046 may represent an example of the display device 164 of FIG. 1.

The PC 1000 may operate in a networked environment using logical connections to one or more remote computers, such as a remote computer 1060. In some examples, one or more network or communication connections 1050 are included. The remote computer 1060 may be another PC, a server, a router, a network PC, and/or a peer device or other common network node, and typically includes many or all of the elements described above relative to the PC 1000, although only a memory storage device 1062 has been illustrated in FIG. 10. The personal computer 1000 and/or the remote computer 1060 can be connected to a local area network (LAN) and/or a wide area network (WAN). Such networking environments are commonplace in offices, enterprise wide computer networks, intranets, and the Internet.

As shown in FIG. 10, a memory 1090 (or portions of this or other memory) can store processor-executable instructions for beam focus control, beam deflector control, pattern recognition and analysis (e.g., to detect and/or characterize motion of a beam feature in a detector plane), etc. Such processor-executable instructions additionally or alternatively can include instructions for performing various calculations and/or for executing various iterative routines, such as those described herein. For example, such processor-executable instructions can, when executed by a processor system, cause the PC 1000 and/or another component (e.g., any suitable components of the SEM 100 of FIG. 1) to execute any of the methods disclosed herein. In some examples, processor-executable instructions can produce displayed images (e.g., of recorded EBSD images), processing of preview images, and/or acquisition of additional images.

General Considerations

As used in this application and in the claims, the singular forms "a," "an," and "the" include the plural forms unless the context clearly dictates otherwise. Additionally, the term "includes" means "comprises." Further, the term "coupled" does not exclude the presence of intermediate elements between the coupled items.

Unless otherwise stated, as used herein, the term "substantially" means the listed value and/or property and any value and/or property that is at least 75% of the listed value and/or property. Equivalently, the term "substantially" means the listed value and/or property and any value and/or property that differs from the listed value and/or property by at most 25%. For example, "substantially equal" refers to quantities that are fully equal, as well as to quantities that differ from one another by up to 25%.

The systems, apparatus, and methods described herein should not be construed as limiting in any way. Instead, the present disclosure is directed toward all novel and non-obvious features and aspects of the various disclosed examples, alone and in various combinations and subcombinations with one another. The disclosed systems, methods, and apparatus are not limited to any specific aspect or feature or combinations thereof, nor do the disclosed systems, methods, and apparatus require that any one or more specific advantages be present or problems be solved. Any theories of operation are to facilitate explanation, but the disclosed systems, methods, and apparatus are not limited to such theories of operation.

Although the operations of some of the disclosed methods are described in a particular, sequential order for convenient presentation, it should be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed systems, methods, and apparatus can be used in conjunction with other systems, methods, and apparatus. Additionally, the description sometimes uses terms like "produce" and "provide" to describe the disclosed methods. These terms are high-level abstractions of the actual operations that are performed. The actual operations that correspond to these terms will vary depending on the particular implementation and are readily discernible by one of ordinary skill in the art.

In some examples, values, procedures, and the like may be characterized by qualifying terms such as "lowest," "best," "minimum ," "extreme," etc. It is to be understood that such descriptions are intended to indicate that a selection among many used functional alternatives can be made, and such selections need not be better, smaller, or otherwise preferable to other selections.

The innovations can be described in the general context of computer-executable instructions, such as those included in program modules, being executed in a computing system on a target real or virtual processor. Generally, program modules or components include routines, programs, libraries, objects, classes, components, data structures, etc. that perform particular tasks or implement particular abstract data types. The functionality of the program modules may be combined or split between program modules as desired in various examples. Computer-executable instructions for program modules may be executed within a local or distributed computing system. In general, a computing system or computing device can be local or distributed, and can include any combination of special-purpose hardware and/or general-purpose hardware with software implementing the functionality described herein, examples of which include personal computers, hand-held devices, tablets, multiprocessor systems, microprocessor-based or programmable consumer electronics, network PCs, minicomputers, mainframe computers, virtual machines, containerized applications, etc.

In various examples described herein, a module (e.g., component or engine) can be "programmed" and/or "coded" to perform certain operations or provide certain functionality, indicating that computer-executable instructions for the module can be executed to perform such operations, cause such operations to be performed, or to otherwise provide such functionality. Although functionality described with respect to a software component, module, or engine can be carried out as a discrete software unit (e.g., program, function, class method), it need not be implemented as a discrete unit. That is, the functionality can be incorporated into a larger or more general-purpose program, such as one or more lines of code in a larger or general-purpose program.

Described algorithms may be, for example, embodied as software or firmware instructions carried out by a digital computer. For instance, any of the disclosed methods can be performed by one or more a computers or other computing hardware that is part of a microscopy tool. The computers can be computer systems comprising one or more processors (processing devices) and tangible, non-transitory computer-readable media (e.g., one or more optical media discs, volatile memory devices (such as DRAM or SRAM), or nonvolatile memory or storage devices (such as hard drives, NVRAM, and solid-state drives (e.g., Flash drives)). The one or more processors can execute computer-executable instructions stored on one or more of the tangible, non-transitory computer-readable media, and thereby perform any of the disclosed techniques. For instance, software for performing any of the disclosed examples can be stored on the one or more volatile, non-transitory computer-readable media as computer-executable instructions, which when executed by the one or more processors, cause the one or more processors to perform any of the disclosed techniques or subsets of techniques.

Additional Examples of the Disclosed Technology

Having described and illustrated the principles of the disclosed technology with reference to the illustrated examples, it will be recognized that the illustrated examples can be modified in arrangement and detail without departing from such principles. For instance, elements of examples performed in software may be implemented in hardware and vice-versa. Also, the technologies from any example can be combined with the technologies described in any one or more of the other examples. It will be appreciated that procedures and functions such as those described with reference to the illustrated examples can be implemented in a single hardware or software module, or separate modules can be provided. The particular arrangements above are provided for convenient illustration, and other arrangements can be used.

Example 1. A computer-implemented method of determining a deformation characteristic of a test image relative to a reference image, the method comprising: determining with a processor , via an iterative routine, a characteristic displacement gradient (DG) tensor that characterizes the deformation characteristic, wherein the determining the characteristic DG tensor comprises, at one or more steps of the iterative routine: calculating an objective function value associated with a trial DG tensor such that the objective function value is based, at least in part, on pixel values of pixel locations that are within a zone of consideration (ZOC) of the test image and the reference image, wherein the ZOC is determined automatically based at least in part on the trial DG tensor.

Example 2. The method of any example herein, particularly example 1, wherein the calculating the objective function value comprises calculating based on a single ZOC.

Example 3. The method of any example herein, particularly any one of examples 1-2, wherein the calculating the objective function value comprises calculating such that, for each pixel location of the reference image within the ZOC, the objective function is calculated with a calculation that refers to the pixel value corresponding to the pixel location exactly once.

Example 4. The method of any example herein, particularly any one of examples 1-3, further comprising, at each step of the one or more steps of the iterative routine, determining the ZOC.

Example 5. The method of any example herein, particularly example 4, wherein the determining the ZOC comprises determining such that the ZOC represents a maximally overlapping set of pixel locations between the pixel locations of the reference image and shifted pixel locations of the test image that are based, at least in part, on the trial DG tensor.

Example 6. The method of any example herein, particularly any one of examples 4-5, wherein the determining the ZOC comprises, for each pixel location $\vec{p}$ of at least a subset of the pixel locations of the reference image: calculating, using the trial DG tensor, a pixel shift $\vec{u}$; and including the pixel location $\vec{p}$ in the ZOC only if a shifted pixel location $\vec{p} + \vec{u}$ corresponds to a pixel location of the test image with a defined pixel value.

Example 7. The method of any example herein, particularly any one of examples 1-6, wherein the calculating the objective function value comprises applying respective weight factors to the pixel values within the ZOC.

Example 8. The method of any example herein, particularly example 7, wherein the respective weight factors are based, at least in part, on one or both of the test image and the reference image.

Example 9. The method of any example herein, particularly any one of examples 7-8, further comprising determining the respective weight factors.

Example 10. The method of any example herein, particularly example 9, wherein the determining the respective weight factors comprises analyzing one or both of the test image and the reference image.

Example 11. The method of any example herein, particularly example 10, wherein the analyzing one or both of the test image and the reference image comprises analyzing a location-dependent noise level associated with one or both of the test image and the reference image.

Example 12. The method of any example herein, particularly any one of examples 10-11, wherein the analyzing one or both of the test image and the reference image comprises one or both of: (i) analyzing a plurality of sample reference images to evaluate noise characteristics of the reference image; and (ii) analyzing a plurality of sample test images to evaluate noise characteristics of the test image.

Example 13. The method of any example herein, particularly any one of examples 9-12, wherein the determining the respective weight factors comprises determining a functional representation of the weight factors as a function of the pixel location.

Example 14. The method of any example herein, particularly any one of examples 1-13, wherein the calculating the objective function value comprises calculating such that the objective function value is normalized against a number of pixel locations within the ZOC.

Example 15. The method of any example herein, particularly any one of examples 1-14, further comprising, prior to the determining the characteristic DG tensor, applying a mask to one or both of the test image and the reference image to exclude selected pixel locations from inclusion in the ZOC.

Example 16. The method of any example herein, particularly any one of examples 1-15, further comprising, prior to the determining the characteristic DG tensor, pre-processing one or both of the test image and the reference image.

Example 17. The method of any example herein, particularly example 16, wherein the pre-processing comprises applying Gaussian blurring to one or both of the test image and the reference image.

Example 18. The method of any example herein, particularly any one of examples 16-17, wherein the pre-processing comprises downscaling one or both of the test image and the reference image.

Example 19. The method of any example herein, particularly any one of examples 16-18, wherein the pre-processing comprises generating one or both of the test image and the reference image as an average of a plurality of recorded images.

Example 20. The method of any example herein, particularly any one of examples 16-19, wherein the pre-processing comprises applying a mask to one or both of the test image and the reference image to exclude selected pixel locations from inclusion in the ZOC.

Example 21. The method of any example herein, particularly any one of examples 1-20, further comprising, prior to the determining the characteristic DG tensor, generating an initial DG tensor based, at least in part, on one or both of the test image and the reference image, and wherein the initial DG tensor is used as the trial DG tensor in at least one step of the iterative routine.

Example 22. The method of any example herein, particularly example 21, wherein the generating the initial DG tensor comprises generating such that the initial DG tensor corresponds to an approximate rotation characterizing a specimen deformation.

Example 23. The method of any example herein, particularly any one of examples 21-22, wherein the generating the initial DG tensor comprises: generating a set of trial rotation vectors, wherein each trial rotation vector represents one or more corresponding rotational transformation components; calculating a rotation error factor associated with each trial rotation vector; and selecting, based on the rotation error factors, an initialization rotation vector from the set of trial rotation vectors, and wherein the generating the initial DG tensor comprises generating such that the initial DG tensor represents a rotation corresponding to the initialization rotation vector.

Example 24. The method of any example herein, particularly example 23, wherein, for each trial rotation vector, the calculating the rotation error factor comprises calculating an objective function value associated with a DG tensor corresponding to the trial rotation vector.

Example 25. The method of any example herein, particularly any one of examples 1-24, wherein the determining the characteristic DG tensor comprises determining such that the characteristic DG tensor corresponds to a trial DG tensor that is associated with an objective function value that satisfies a convergence criterion.

Example 26. The method of any example herein, particularly any one of examples 1-25, wherein the determining the characteristic DG tensor comprises repeating the steps of the iterative routine until the objective function value satisfies a convergence criterion.

Example 27. The method of any example herein, particularly any one of examples 1-26, wherein the determining the characteristic DG tensor comprises performing an iterative algorithm that operates to identify a trial DG tensor that yields a corresponding objective function value that satisfies a convergence criterion.

Example 28. The method of any example herein, particularly example 27, wherein the iterative algorithm comprises an iterative minimization algorithm.

Example 29. The method of any example herein, particularly any one of examples 27-28, wherein the iterative algorithm comprises a Nelder-Mead minimization algorithm.

Example 30. The method of any example herein, particularly any one of examples 1-29, further comprising determining a stress tensor corresponding to the characteristic DG tensor.

Example 31. The method of any example herein, particularly example 30, wherein the determining the stress tensor is performed based, at least in part, on the characteristic DG tensor.

Example 32. The method of any example herein, particularly any one of examples 30-31, wherein the determining the stress tensor comprises determining a strain tensor based, at least in part, on the characteristic DG tensor, and wherein the determining the stress tensor is performed based, at least in part, on the strain tensor.

Example 33. The method of any example herein, particularly any one of examples 1-33, further comprising determining an uncertainty associated with one or more components of the characteristic DG tensor.

Example 34. A computer-implemented method of determining a deformation characteristic of a test image relative to a reference image, the method comprising: determining, with a processor system, one or more rotational transformation components corresponding to the test image; generating an initial DG tensor based, at least in part, on the one or more rotational transformation components; and using the initial DG tensor, determining, with the processor system, a characteristic DG tensor that characterizes the deformation characteristic including by, in one or more steps of an iterative routine, calculating a scalar objective function value corresponding to each of one or more trial DG tensors, wherein one of the one or more trial DG tensors in a first step of the iterative routine is the initial DG tensor.

Example 35. The method of any example herein, particularly example 34, wherein the determining the characteristic DG tensor is performed subsequent to the determining the one or more rotational transformation components.

Example 36. The method of any example herein, particularly any one of examples 34-35, wherein the determining the one or more rotational transformation components comprises: generating a set of trial rotation vectors, wherein each trial rotation vector represents one or more trial rotational transformation components; calculating one or more rotation error factors associated with each trial rotation vector; and selecting, based on the rotation error factors, an initialization rotation vector from the set of trial rotation vectors, and wherein the generating the initial DG tensor comprises generating such that the initial DG tensor represents a rotation corresponding to the initialization rotation vector.

Example 37. The method of any example herein, particularly example 36, wherein the generating the set of trial rotation vectors comprises generating such that the trial rotation vectors are distributed in a three-dimensional vector space with one or both of: (i) a vector spacing that is based, at least in part, on an expected convergence radius of the objective function value; and (ii) a maximum vector magnitude that is based, at least in part, on an expected rotational magnitude associated with the test image, and wherein the method further comprises receiving, from a user, one or both of the expected convergence radius and the expected rotational magnitude.

Example 38. The method of any example herein, particularly any one of examples 34-37, wherein the calculating the objective function value comprises, in each step of the iterative routine and for each individual trial DG tensor of the one or more trial DG tensors: for each pixel location within a ZOC of the reference image, determining, based on the individual trial DG tensor, a shifted pixel location of the test image; and calculating the objective function value such that the objective function value represents a weighted average difference between pixel values of the pixel locations of the reference image within the ZOC and pixel value of the shifted pixel locations of the test image.

Example 39. The method of any example herein, particularly example 38, further comprising, in each step of the iterative routine and for each individual trial DG tensor of the one or more trial DG tensors, determining the ZOC based in part on the individual trial DG tensor.

Example 40. The method of any example herein, particularly example 39, wherein the determining the ZOC comprises determining such that the ZOC represents a maximally overlapping set of pixel locations between the pixel locations of the reference image and the shifted pixel locations of the test image.

Example 41. The method of any example herein, particularly any one of examples 38-40, wherein, in at least one step of the iterative routine, the one or more trial DG tensors consists of fewer DG tensors than the number of elements of each DG tensor that are varied in each step of the iterative routine.

Example 42. The method of any example herein, particularly any one of examples 34-41, further comprising determining a stress tensor corresponding to the characteristic DG tensor.

Example 43. The method of any example herein, particularly example 42, wherein the determining the stress tensor is performed based, at least in part, on the characteristic DG tensor.

Example 44. The method of any example herein, particularly any one of examples 42-43, wherein the determining the stress tensor comprises determining a strain tensor based, at least in part, on the characteristic DG tensor, and wherein the determining the stress tensor is performed based, at least in part, on the strain tensor.

Example 45. The method of any example herein, particularly any one of examples 34-44, further comprising determining an uncertainty associated with one or more components of the characteristic DG tensor.

Example 46. A system comprising: an electron optics assembly configured to direct an electron beam to a selected location on a specimen; a detector assembly configured to record a diffraction pattern associated with an interaction between the electron beam and the specimen; and a controller programmed to: receive a reference image from the detector assembly when the electron beam is directed to a reference location on the specimen; receive a test image from the detector assembly when the electron beam is directed to a test location on the specimen; and determine, via an iterative routine, a characteristic DG tensor that characterizes a deformation characteristic of the test image relative to the reference image by, at each step of the iterative routine, calculating an objective function value corresponding to a trial DG tensor such that the objective function value is based on pixel values of pixel locations that are within a ZOC of each of the test image and the reference image, wherein the ZOC is determined automatically based in part on the trial DG tensor.

Example 47. The system of any example herein, particularly example 46, wherein the controller further is programmed to determine one or more stress components corresponding to the characteristic DG tensor, and wherein the system comprises an output interface for conveying the one or more stress components to a user.

Example 48. The system of any example herein, particularly any one of examples 46-47, further comprising a non-transitory computer readable medium storing instructions which, when executed by the controller, cause the controller to determine the characteristic DG tensor.

Example 49. A non-transitory computer readable medium storing instructions which, when executed by a computer, cause the computer to perform a method of determining a deformation characteristic of a test image relative to a reference image, the method comprising: determining, via an iterative routine, a characteristic DG tensor that characterizes the deformation characteristic, wherein the instructions comprise instructions for determining the characteristic DG tensor by, at each step of the iterative routine, calculating an objective function value corresponding to a trial DG tensor such that the objective function value is based on pixel values of pixel locations that are within a zone of consideration (ZOC) of each of the test image and the reference image, wherein the ZOC is determined automatically based in part on the trial DG tensor.

In view of the many possible examples in which the principles of the disclosed technology may be applied, it should be recognized that the illustrated examples are only preferred examples and should not be taken as limiting the scope of the disclosed technology. Rather, the scope is defined by the following claims. We therefore claim all that comes within the scope of these claims.

# EP 4 738 256 A1

**Claims**

1. A computer-implemented method of determining a deformation characteristic of a test image relative to a reference image, the method comprising:

   determining with a processor, via an iterative routine, a characteristic displacement gradient (DG) tensor that characterizes the deformation characteristic, wherein the determining the characteristic DG tensor comprises, at one or more steps of the iterative routine:

   calculating an objective function value associated with a trial DG tensor such that the objective function value is based, at least in part, on pixel values of pixel locations that are within a zone of consideration (ZOC) of the test image and the reference image, wherein the ZOC is determined automatically based at least in part on the trial DG tensor.

2. The method of claim 1, wherein the calculating the objective function value comprises calculating such that, for each pixel location of the reference image within the ZOC, the objective function is calculated with a calculation that refers to the pixel value corresponding to the pixel location exactly once.

3. The method of either claim 1 or claim 2, further comprising, at each step of the one or more steps of the iterative routine, determining the ZOC such that the ZOC represents a maximally overlapping set of pixel locations between the pixel locations of the reference image and shifted pixel locations of the test image that are based, at least in part, on the trial DG tensor.

4. The method of any previous claim, wherein the calculating the objective function value comprises applying respective weight factors to the pixel values within the ZOC.

5. The method of claim 4, further comprising determining the respective weight factors, and wherein the determining the respective weight factors comprises analyzing one or both of the test image and the reference image.

6. The method of either claim 1 or claim 2, wherein the calculating the objective function value comprises calculating such that the objective function value is normalized against a number of pixel locations within the ZOC.

7. The method of any previous claim, further comprising, prior to the determining the characteristic DG tensor, generating an initial DG tensor based, at least in part, on one or both of the test image and the reference image, and wherein the initial DG tensor is used as the trial DG tensor in at least one step of the iterative routine.

8. The method of claim 7, wherein the generating the initial DG tensor comprises:

   generating a set of trial rotation vectors, wherein each trial rotation vector represents one or more corresponding rotational transformation components;
   calculating a rotation error factor associated with each trial rotation vector; and
   selecting, based on the rotation error factors, an initialization rotation vector from the set of trial rotation vectors, and
   wherein the generating the initial DG tensor comprises generating such that the initial DG tensor represents a rotation corresponding to the initialization rotation vector.

9. The method of any one of claims 1-6, wherein the determining the characteristic DG tensor comprises determining such that the characteristic DG tensor corresponds to a trial DG tensor that is associated with an objective function value that satisfies a convergence criterion.

10. The method of any one of claims 1-6, wherein the determining the characteristic DG tensor comprises performing a Nelder-Mead minimization algorithm that operates to identify a trial DG tensor that yields a corresponding objective function value that satisfies a convergence criterion.

11. A system comprising:

   an electron optics assembly configured to direct an electron beam to a selected location on a specimen;
   a detector assembly configured to record a diffraction pattern associated with an interaction between the electron beam and the specimen; and
   a controller programmed to:

24

receive a reference image from the detector assembly when the electron beam is directed to a reference location on the specimen;

receive a test image from the detector assembly when the electron beam is directed to a test location on the specimen; and

determine, via an iterative routine, a characteristic DG tensor that characterizes a deformation characteristic of the test image relative to the reference image by, at each step of the iterative routine, calculating an objective function value corresponding to a trial DG tensor such that the objective function value is based on pixel values of pixel locations that are within a ZOC of each of the test image and the reference image, wherein the ZOC is determined automatically based in part on the trial DG tensor.

**12.** The system of claim 11, wherein the controller further is programmed to determine one or more stress components corresponding to the characteristic DG tensor, and wherein the system comprises an output interface for conveying the one or more stress components to a user.

**13.** The system of either claim 11 or claim 12, further comprising a non-transitory computer readable medium storing instructions which, when executed by the controller, cause the controller to determine the characteristic DG tensor.

FIG. 1

FIG. 2A

FIG. 2B

FIG. 3

400

402

result visualization

FIG. 4

FIG. 5A

FIG. 5B

610

FIG. 6A

620

FIG. 6B

FIG. 6C

FIG. 6D

FIG. 7A

FIG. 7B

FIG. 7C

FIG. 7D

FIG. 7E

FIG. 7F

FIG. 7G

FIG. 7H

FIG. 8

900
910 APPLY MASK TO TEST PATTERN IMAGE AND/OR REFERENCE PATTERN IMAGE

912 PRE-PROCESS TEST PATTERN IMAGE AND/OR REFERENCE PATTERN IMAGE

914 DETERMINE ROTATIONAL TRANSFORMATION COORDINATE(S)

916 GENERATE INITIAL DG TENSOR

918 RECEIVE EXPECTED CONVERGENCE RADIUS AND/OR EXPECTED ROTATIONAL MAGNITUDE

920 GENERATE TRIAL ROTATION VECTORS

922 CALCULATE ROTATION ERROR FACTORS

924 SELECT INITIALIZATION ROTATION VECTOR

926 DETERMINE CHARACTERISTIC DG TENSOR

928 DETERMINE ZOC

930 CALCULATE OBJECTIVE FUNCTION VALUE

932 DETERMINE WEIGHT FACTORS

934 APPLY WEIGHT FACTORS TO PIXEL VALUES

936 DETERMINE SHIFTED PIXEL LOCATIONS

938 DETERMINE STRESS TENSOR

## FIG. 9

1000

PROCESSOR
1002

MONITOR
1046

COMM.
CONNECTIONS
1050

INPUT DEV. 1040

OUTPUT DEV. 1045

STORAGE DEV.
1030

1006

BEAM FOCUS CONTROL

BEAM DEFLECTOR
CONTROL

PATTERN RECOGNITION
AND ANALYSIS

1090

RAM
1010

MEMORY
1004

1008

BIOS
1012

REMOTE
COMPUTER
1060

MEM/
STORAGE
1062

FIG. 10

# EUROPEAN SEARCH REPORT

**Application Number**

EP 25 21 1358

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 730 486 A (UNIV SHANGHAI JIAOTONG) 30 April 2021 (2021-04-30) | 1,2,4-6, 9-13 | INV. G06T7/60 |
| Y | * paragraph [0002] - paragraph [0040] * | 7 | G06T7/73 |
| A | * paragraph [0139] * | 3,8 | |
| | ----- | | ADD. |
| Y | US 2010/158392 A1 (ADAMS BRENT L [US] ET AL) 24 June 2010 (2010-06-24) | 7 | G01N23/203 |
| A | * paragraph [0031] - paragraph [0049] * | 1-6,9-13 | |
| | ----- | | |

**TECHNICAL FIELDS SEARCHED (IPC)**

G06T
H01J
G01N

The present search report has been drawn up for all claims

| Place of search | Date of completion of the search | Examiner |
|---|---|---|
| Munich | 12 February 2026 | Gitzenis, Savvas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 1358

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2026

| Patent document cited in search report | Publication date | Patent family member(s) | Publication date |
|---|---|---|---|
| CN 112730486 A | 30-04-2021 | NONE | |
| US 2010158392 A1 | 24-06-2010 | NONE | |

EPO FORM P0459

For more details about this annex : see Official Journal of the European Patent Office, No. 12/82